(19) Europäisches Patentamt
European Patent Office
Office européen des brevets

(11) **EP 2 587 328 A1**

(12) **EUROPÄISCHE PATENTANMELDUNG**

(43) Veröffentlichungstag:
**01.05.2013 Patentblatt 2013/18**

(51) Int Cl.:
***G05B 23/02*** *(2006.01)*

(21) Anmeldenummer: **12179481.2**

(22) Anmeldetag: **07.08.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **06.09.2011 EP 11180247**

(71) Anmelder: **Siemens Aktiengesellschaft
80333 München (DE)**

(72) Erfinder:
• **Simmel, Annika
76131 Karlsruhe (DE)**
• **Bierweiler, Thomas
76297 Stutensee (DE)**

(54) **Unterstützung der Fehlerdiagnose einer Industrieanlage**

(57) Zur Unterstützung der Fehlerdiagnose einer Industrieanlage (2), die eine Mehrzahl von über ein Rohrleitungssystem (4) verbundenen Anlagenkomponenten (3) aufweist, ist vorgesehen, jede Anlagenkomponente (3) einem von mehreren abstrakten Komponententypen (5, 10-15) zuzuordnen, wobei jedem Komponententyp (5, 10-15) wiederum ein gewichteter, gerichteter Komponentengraph (30, 40, 50, 60, 61, 70, 80, 90, 95, 96) zugeordnet wird. Ein RI-Fließbild (1) der Industrieanlage (2) wird ausgehend von einem Startpunkt entlang eines Rohrleitungssystems (4) komponentenweise abgearbeitet. Dabei wird bei jeder Anlagenkomponente (3) auf deren dem Komponententyp (5, 10-15) nach zugeordneten Komponentengraphen (30, 40, 50, 60, 61, 70, 80, 90, 95, 96) zugegriffen. Die einzelnen Komponentengraphen (30, 40, 50, 60, 61, 70, 80, 90, 95, 96) werden zu einem System von gewichteten, gerichteten Gesamtgraphen (140, 141, 142) der Industrieanlage (2) zusammengefügt, deren Knoten jeweils mehreren einzelnen Anlagenkomponenten (3) zugeordnet sind. Dabei wird der Diagnose-Graph um zusätzliche Knoten (151) für Fehlerursachen und Kanten (152) für deren Auswirkungen ergänzt.

FIG 19

**Beschreibung**

Die Erfindung bezieht sich auf ein Verfahren zur Unterstützung der Fehlerdiagnose einer Industrieanlage. Die Erfindung bezieht sich weiterhin auf eine zugehörige Vorrichtung.

Der Begriff Industrieanlage bezieht sich hier und im Folgenden insbesondere auf eine prozesstechnische oder verfahrenstechnische Anlage aus dem Bereich der chemischen Industrie, Getränke- und Lebensmitteltechnik, Umwelttechnik, Pharmaindustrie oder Gas- und Ölindustrie.

Eine derartige (Industrie-)Anlage umfasst in der Regel eine Vielzahl von einzelnen, miteinander verschalteten Anlagenkomponenten. Typische Anlagenkomponenten einer verfahrens- bzw. prozesstechnischen Anlage sind dabei Behälter, Reaktoren, Rohrleitungen, Armaturen usw. Diese werden im Zuge eines Herstellungsprozesses von Ausgangsstoffen, insbesondere von Fluiden, unter Veränderung/Verarbeitung der Ausgangsstoffe zu einem daraus resultierenden Produkt durchlaufen.

Den einzelnen Anlagenkomponenten sind üblicherweise Prozess- oder Betriebsparameter zugeordnet. Ein solcher Prozessparameter beschreibt dabei einen Zustand der jeweiligen Anlagenkomponente bzw. des in der Anlagenkomponente zu verarbeitenden Fluids, welcher normalerweise im Laufe des Prozesses veränderlich ist. Solche Prozessparameter sind zum einen insbesondere eine Temperatur, ein Druck, eine Durchflussgeschwindigkeit bzw. ein damit korrespondierender Massenstrom des Fluids. Zum anderen kann ein solcher Betriebsparameter aber auch eine zu der jeweiligen Anlagenkomponente gehörige Einstellung beschreiben, beispielsweise eine Ventilstellung ("offen", "geschlossen", "teilweise geschlossen") oder eine Pumpenleistung bzw. eine zugeordnete Drehzahl.

Im Folgenden werden die oben genannten Prozessparameter in zwei Gruppen unterschieden, nämlich in beobachtbare (messtechnisch erfasste) Prozessparameter und solche, die nicht beobachtbar sind.

Beobachtbare Prozessparameter werden meist (zumindest teilweise) an einem Bedienbild einer Leit- oder Prozesswarte der Industrieanlage dargestellt. Das Bedienbild zeigt dabei oft ein schematisches, meist vereinfachtes Fließbild der Anlage. Dabei umfasst das Bedienbild mehrere "Bedienobjekte", wobei jedes Bedienobjekt jeweils einer Anlagenkomponente zugeordnet ist. Ein Bedienobjekt dient dabei dazu, aktuelle Betriebsdaten (insbesondere Ist-, Soll- und Stellwerte eines beobachtbaren Prozessparameters) dieser Anlagenkomponente darzustellen. Tritt im Betrieb der Anlage ein Fehler auf, wodurch ein Prozessparameter von einem vorgegebenen Sollwert um mehr als eine bestimmte Alarmschwelle abweicht, so wird durch das Bedienobjekt üblicherweise ein Alarm (grafisch) ausgegeben.

Anhand eines solchen Alarms eine Fehlerursache zu finden und damit beheben zu können, ist aufgrund der meist sehr hohen Komplexität der Anlage sowie der Unvollständigkeit eines solchen Bedienbildes jedoch oft sehr schwierig und entsprechend zeitaufwändig. Eine zu spät erkannte Fehlerursache kann jedoch in Produktionsverlusten resultieren, weshalb eine frühzeitige Fehlerursachenerkennung wünschenswert ist.

Die US 2005/246112 A1 offenbart bereits ein Verfahren zur Unterstützung der Fehlerdiagnose einer Industrieanlage, die eine Mehrzahl von über ein Rohrleitungssystem verbundenen Anlagenkomponenten aufweist, wobei jede Anlagenkomponente einem von mehreren abstakten Komponententypen zuordenbar ist und wobei ein RI-Fließbild der Industrieanlage ausgehend von einem Startpunkt entlang eines Rohrleitungssystems komponentenweise abgearbeitet wird.

Eine Abbildung mit gerichteten, gewichteten Graphen ist in der Regelungstechnik aus der EP 2 043 033 A1 bekannt.

Der Erfindung liegt daher die Aufgabe zugrunde, die Fehlerdiagnose einer Industrieanlage zu erleichtern.

Bezüglich eines Verfahrens zur Unterstützung der Fehlerdiagnose wird obige Aufgabe erfindungsgemäß gelöst durch die Merkmale des Anspruchs 1. Das Verfahren unterstützt dabei die Fehlerdiagnose einer Industrieanlage, die eine Mehrzahl von über ein Rohrleitungssystem verbundenen Anlagenkomponenten aufweist. Im Rahmen des Verfahrens ist dabei vorgesehen, dass für die Anlage ein System von gerichteten, gewichteten Graphen erstellt wird. Zur Erstellung dieses Systems von Graphen wird jede Anlagenkomponente einem von mehreren vorgegebenen, abstrakten Komponententypen zugeordnet. Ein RI-Fließbild ("Rohrleitungs-/Instrumenten-Darstellung") der Industrieanlage wird im Zuge des Verfahrens ausgehend von einem ausgewählten Startpunkt entlang seiner Rohrleitungen komponentenweise abgearbeitet. Dabei wird jeweils bei Erreichen einer Komponente auf einen Komponenten-Graph zugegriffen, der dieser Komponente dem Komponententyp nach (d. h. nach Maßgabe des Komponententyps) zugeordnet ist. Für jede spezifische Komponente wird also derjenige Komponentengraph ausgewählt, der für den Komponententyp, dem die Komponente zugeordnet wurde, hinterlegt ist. Die einzelnen Komponenten-Graphen werden schließlich zu einem System von gewichteten, gerichteten (Gesamt-)Graphen der Industrieanlage zusammengefügt, wobei deren Knoten jeweils mehreren einzelnen Anlagenkomponenten bzw. deren zugehörigen Prozessparametern zugeordnet sind.

Mit dem Begriff "Graph" ist im Folgenden im Sinne der so genannten Graphentheorie eine Darstellung bezeichnet, welche die einzelnen Prozessparameter der Anlagenkomponenten sowie zwischen den einzelnen Prozessparametern der Anlagenkomponenten bestehende Verbindungen und Wechselwirkungen repräsentiert. Dabei ist jeder Anlagenkomponente bzw. jedem Prozessparameter ein "Knoten" zugeordnet. Im Folgenden sind die Verbindungen zwischen den einzelnen Knoten als "Kanten" bezeichnet. Die Kanten sind insofern "gerichtet", als sie eine Wirkrichtung einer zugeordneten Wechselwirkung von einem unabhängigen Prozessparameter auf einen davon abhängigen Prozessparameter anzeigen. Die gerichteten Kanten werden in dem Graphen durch Pfeile repräsentiert, die in die Wirkrichtung zeigen.

Im Rahmen der Erfindung werden stets "gewichtete" Graphen betrachtet. Dabei wird jeder Kante ein Wert zugeordnet. In einer bevorzugten Ausführung der Erfindung ist hierzu jedem Prozessparameter ein so genannter "Zustand" zugeordnet, wobei dieser Zustand als "0" oder "Normal" betrachtet wird, wenn der zugeordnete Prozessparameter in einem für diesen vorgegebenen Gültigkeitsbereich liegt. Weicht ein Prozessparameter von diesem Gültigkeitsbereich ab, befindet er sich nicht mehr im Normalzustand. Dem Prozessparameter wird dann beispielsweise ein "positiver Zustand" oder "+" zugeordnet, wenn er über einer oberen Grenze des Gültigkeitsbereichs liegt bzw. ein "negativer Zustand" oder "-", wenn er unterhalb einer unteren Grenze des Gültigkeitsbereichs liegt.

Zieht eine solche Abweichung des betrachteten Prozessparameters bei einem abhängigen Prozessparameter eine gleichsinnige Abweichung nach sich, so wird in der vorstehend beschriebenen Ausführung eine von diesem Prozessparameter-Knoten zu dem Knoten des abhängigen Prozessparameters gerichtete Kante positiv ("+1") gewichtet. Als gleichsinnig wird eine Abweichung dabei dann betrachtet, wenn die oben genannten Zustände der beiden Prozessparameter das gleiche Vorzeichen haben. Dementsprechend wird eine Kante bei einer gegensinnigen Änderung, wenn also beide Zustände unterschiedliche Vorzeichen haben, negativ ("-1") gewichtet.

Zusätzlich ist bevorzugt vorgesehen, die Stärke der Abweichung des jeweiligen Prozessparameters aus seinem Gültigkeitsbereich zu betrachten. Dabei wird eine Abweichung als "stark" betrachtet, wenn die Abweichung des zugehörigen Prozessparameters durch einen ggf. vorhandenen Regelkreis nicht ausregelbar ist, während eine "schwache" Abweichung durch einen Regelkreis ausgeglichen werden kann. Dabei ist vorzugsweise vorgesehen, dass einem Prozessparameter ein Zustand "+10" oder "-10" bei einer starken positiven bzw. negativen Abweichung zugeordnet wird. Zudem wird eine Kante mit "+10" oder "-10" gewichtet, wenn der zugehörige abhängige Prozessparameter sich stark gleichsinnig bzw. gegensinnig ändert. Weitere Abstufungen sind dabei jedoch ebenfalls möglich.

Als "Komponententyp" ist im Rahmen des erfindungsgemäßen Verfahrens eine der Art nach spezifizierte, generische Anlagenkomponente bezeichnet, welche bezüglich der Anlage bzw. anderer Anlagenkomponenten eine typische Wirkungsweise besitzt. Beispielhafte Komponententypen einer typischen Anlage sind insbesondere "Ventil", "Behälter" (auch als "Vorratstank" bezeichnet), "Rohrleitungsabschnitt", "Pumpe", "Durchflussmessgerät", "Drucksensor" etc.

Die im Zuge des erfindungsgemäßen Verfahrens herangezogenen Komponenten-Graphen sind den vorgesehenen Komponententypen paarweise zugeordnet. Für jeden Komponententyp ist also ein zugehöriger Komponenten-Graph hinterlegt. Jeder Komponenten-Graph umfasst in bevorzugter Ausprägung des Verfahrens mindestens einen ersten Knoten, der einem Prozessparameter der Anlagenkomponente zugeordnet ist, sowie mindestens einen weiteren Knoten, welcher einem von dem betrachteten Prozessparameter abhängigen Prozessparameter zugeordnet ist. Zudem umfasst der Komponenten-Graph mindestens eine gerichtete, gewichtete Kante von dem ersten Knoten zu dem weiteren Knoten. Für einen betrachteten Komponententyp beschreibt der Komponenten-Graph dabei in allgemeiner Form die Wechselwirkungen der zugeordneten Anlagenkomponente bzw. deren zugehörigen Prozessparameters oder deren zugehörigen Prozessparameter mit anderen Anlagenkomponenten bzw. Prozessparametern.

Zur besseren Abgrenzung von diesen Komponenten-Graphen, die stets lediglich eine einzelne Anlagenkomponente beschreiben, ist der oder jeder verfahrensgemäß zu erstellende Graph der Gesamtanlage oder eines mehrere Komponenten enthaltenden Anlagenteils auch als "Gesamtgraph" bezeichnet. Das System von Gesamtgraphen kann bei einer einfachen Anlage aus einem einzigen Gesamtgraph bestehen. Bei komplexeren Anlagen besteht das System aber in der Regel aus mehreren Gesamtgraphen, von denen jeder einem Teil der Anlage, insbesondere einem Untersystem oder einer Betriebszustandsgruppe zugeordnet ist. Die Begriffe "Untersystem" und "Betriebszustandsgruppe" sind im Folgenden näher erläutert.

Als Startpunkt für die komponentenweise Abarbeitung des für das Verfahren herangezogenen RI-Fließbildes der spezifischen Anlage wird vorzugsweise stets ein Behälter oder eine Rohrleitungsverzweigung gewählt. Vorzugsweise werden die Rohrleitungen in Fließrichtung eines in der Anlage zu verarbeitenden Fluids abgearbeitet.

Die einzelnen Komponenten-Graphen dienen bei der Abarbeitung des RI-Fließbildes quasi als Vorlagen (oder - in der Nomenklatur der objektorientierten Programmierung - Klassen), die beliebig oft instanziiert werden können, auf die also beliebig oft zugegriffen werden kann.

Ein im Zuge des erfindungsgemäßen Verfahrens erstellter Graph der Gesamtanlage oder eines Anlagenteils kann dann vorteilhafterweise zur Fehlerursachenanalyse genutzt werden, da er Fehlerbeziehungen innerhalb der Anlage aufzeigt.

Mit Hilfe des vorgestellten Verfahrens ist es vorteilhafterweise möglich, sogar bei einer sehr komplexen Industrieanlage systematisch den zugehörigen Graphen zu erstellen. Dies ermöglicht insbesondere, den oder jeden Gesamtgraphen der spezifischen Anlage automatisiert aus den hinterlegten Komponenten-Graphen zu erstellen. Da ein RI-Fließbild normalerweise zu jeder Industrieanlage, insbesondere sogar schon in der Planungsphase derselben, zur Verfügung steht, kann das oben beschriebene Verfahren vorteilhafterweise auf quasi jede beliebige Industrieanlage angewandt werden.

Die verfahrensgemäße Erstellung des oder jedes Gesamtgraphen vereinfacht die Fehlerursachenanalyse insbesondere in Fällen, in denen kein oder wenig Erfahrungsschatz über das Verhalten einer spezifischen Anlage in deren Betrieb vorhanden ist. Es ist deshalb besonders vorteilhaft bei der proaktiven Fehlerfindung und -vermeidung in der Planungsphase der Anlage einsetzbar.

In einer bevorzugten Ausführungsform des Verfahrens werden sowohl der oder jeder Gesamtgraph als auch die Komponenten-graphen in Form jeweils einer Adjazenzmatrix dargestellt. Die jeweilige Adjazenzmatrix repräsentiert den zugehörigen Graphen, indem jeder Spalte bzw. jeder Zeile ein Knoten zugeordnet wird und indem die einzelnen Elemente der Matrix jeweils einer gerichteten Kante von dem in der zugeordneten Zeile repräsentierten Knoten zu einem von der zugeordneten Spalte repräsentierten Knoten entspricht. Der Eintrag selbst gibt dabei als Zahlenwert die Wichtung der betreffenden Kante wieder.

Zur Festlegung der zu einer jeweiligen Adjazenzmatrix zugehörigen Prozessparameter ist dabei jeder Adjazenzmatrix ein Prozessparametervektor zugeordnet. Dieser umfasst als Vektorelemente alle Prozessparameter, welche in dem zugehörigen Graphen als Knoten vorkommen. Dabei wird die Reihenfolge der Vektorelemente auf die Reihenfolge der Spalten- bzw. Zeileneinträge der Matrix übertragen. D. h., ein Element in der i-ten Zeile und der j-ten Spalte der Adjazenzmatrix entspricht einer Kante vom i-ten Vektorelement (Prozessparameter) zum j-ten Vektorelement (Prozessparameter) des Prozessparametervektors.

Zur Erstellung der Gesamt-Adjazenzmatrix des oder jedes Gesamtgraphen der Anlage ist vorzugsweise vorgesehen, dass zunächst jeder Komponentengraph in Form der zugeordneten unspezifischen Komponentenadjazenzmatrix vorgegeben ist. Unspezifisch bedeutet dabei, dass in dem zugehörigen Prozessparametervektor die einzelnen Prozessparameter in allgemeiner, nicht instanziierter (d. h. konkret spezifizierter) Form aufgeführt sind.

Im Zuge des Verfahrens werden vorzugsweise alle Anlagenkomponenten der spezifischen Anlage anhand des RI-Fließbildes zunächst eindeutig bezeichnet, insbesondere nummeriert, und damit spezifiziert. Es wird somit ein Prozessparametervektor der Gesamtanlage oder eines Anlagenteils gebildet.

Entsprechend der Anzahl an betrachteten Prozessparametern der Anlage wird in zweckmäßiger Ausführung des Verfahrens des Weiteren eine - zunächst leere, d. h. wertmäßig unbestimmte - Gesamtadjazenzmatrix für den oder jeden Gesamtgraphen erstellt. Diese zunächst leere Gesamtadjazenzmatrix wird dann komponentenweise "gefüllt". Hierbei werden - ausgehend von dem gewählten Startpunkt - für jede spezifische Anlagenkomponente entlang des Bearbeitungspfads die zugehörige Komponentenadjazenzmatrix und der zugehörige Prozessparametervektor bestimmt und spezifiziert (oder instanziiert), indem die unbestimmten Prozessparameter des Komponententyps, auf dem die Komponentenadjazenzmatrix beruht, durch die spezifischen Prozessparameter des spezifischen Anlagenobjekts ersetzt werden. Beispielsweise wird der allgemein als "Pi" bezeichnete Eingangsdruck des Komponententyps "Rohrleitungsabschnitt" im Zuge der Spezifizierung durch den spezifischen Eingangsdruck "Pi_R01215" eines spezifischen Rohrleitungsabschnitts "R01215" ersetzt. Die Einträge der Komponentenadjazenzmatrix werden anschließend nach Maßgabe der spezifizierten Prozessparameter in die Gesamtadjazenzmatrix übertragen. Dabei wird entlang der Rohrleitungen so lange sukzessive auf Anlagenkomponenten der Industrieanlage zugegriffen, bis für alle Anlagenkomponenten eine Eintragung in der Gesamtadjazenzmatrix erfolgt ist.

In einer für eine Automatisierung des Verfahrens besonders vorteilhaften Ausgestaltung des Verfahrens ist vorgesehen, dass das RI-Fließbild der Anlage in einer Datenbank, insbesondere in einem XML-Format ("Extensible Markup Language") hinterlegt ist. Ebenso sind auch die Komponentenadjazenzmatrizen, wiederum insbesondere in einem XML-Format, in derselben oder einer anderen Datenbank hinterlegt.

Im Rahmen des Verfahrens wird der oder jeder Gesamtgraph der Anlage nach dessen Erstellung durch zusätzliche Fehlerursacheknoten erweitert, die keine Entsprechung in körperlichen Anlagenkomponenten haben. In solchen Fehlerursacheknoten sind die Auswirkungen von typischen Fehlerursachen, wie beispielsweise Verstopfungen, Leckagen, Fehlfunktionen von Sensoren oder Pumpen, auf einen oder mehrere Prozessparameter der Industrieanlage hinterlegt. Entsprechend enthält jeder Fehlerursacheknoten eine gerichtete, gewichtete Kante zu einem Knoten oder mehreren Knoten des oder jedes Gesamtgraphen, der einer körperlichen Anlagenkomponente entspricht. Der Gesamtgraph mit angefügten Fehlerursacheknoten ist im Folgenden als "Diagnosegraph" bezeichnet.

In bevorzugter Form wird jedem Fehlerursacheknoten einer von mehreren hinterlegten Fehlerursachetypen zugeordnet, wobei für jeden Fehlerursachetyp wiederum eine zugeordnete Fehlerursachenadjazenzmatrix, insbesondere in einem XML-Format, hinterlegt ist. Fehlerursacheknoten werden insofern genauso behandelt wie Knoten, die körperlichen Anlagenkomponenten zugeordnet sind.

Vorzugsweise wird der Gesamt- oder Diagnosegraph bei einer festgestellten Abweichung eines beobachtbaren Prozessparameters einer der Anlagenkomponenten von einem Normalzustand mit Hilfe des so genannten ESFA ("Extended Symptom-Fault Association")-Verfahrens zur Ermittlung von möglichen Fehlerursachen ausgewertet, wie es beispielsweise in D.S. Nam et al.: "Automatic Construction of Extended Symptom-Fault Associations from the signed Digraph", Computers & Chemical Engineering, 20, 605-610, 1996 beschrieben ist.

Vorzugsweise werden die so ermittelten möglichen Fehlerursachen grafisch angezeigt, beispielsweise auf einem separierten Anzeigebereich eines Bedienbildes der Industrieanlage.

Eine beobachtbare Abweichung wird vorzugsweise mit Hilfe von historischen Daten über das Verhalten der Anlage, insbesondere durch SOM ("self organising maps"), erkannt. Zusätzlich oder alternativ kann eine Abweichung mit Hilfe von fest vorgegebenen Alarmschwellen erkannt werden, welche zu jedem beobachtbaren Prozessparameter hinterlegt sind.

Um bei einer komplexen Anlage das System der Gesamtgraphen möglichst übersichtlich zu halten, ist in einer bevorzugten Ausführungsform des Verfahrens vorgesehen, das RI-Fließbild zunächst in einzelne Untersysteme zu unterteilen, wobei sich diese Untersysteme optional überlappen können. Als Untersystem ist dabei eine Gruppe von Anlagenkomponenten bezeichnet, die wiederum durch ein Rohrleitungssystem, umfassend eine Anzahl von Rohrleitungsabschnitten, miteinander verbunden sind. Für jedes Untersystem wird daher ein Untersystemgraph erstellt. Die einzelnen Untersystemgraphen können wahlweise als System von einzelnen Gesamtgraphen das Verfahrensergebnis bilden oder zu einem übergreifenden Gesamtgraph eines größeren Anlagenteils oder der Gesamtanlage zusammengefasst werden.

Zweckmäßigerweise werden dabei die einzelnen Untersysteme derart gewählt, dass die zugehörigen Anlagenkomponenten nur Prozessparameter des eigenen Untersystems beeinflussen und nicht mit Anlagenkomponenten bzw. deren Prozessparametern eines anderen Untersystems wechselwirken. Dabei hat es sich als zweckmäßig erwiesen, jeweils einen Behälter als Grenzkomponente zur Abgrenzung zweier Untersysteme voneinander zu wählen.

In einer weiteren bezüglich einer einfachen Durchführung vorteilhaften Ausführungsform wird das RI-Fließbild in einzelne Betriebszustandsgruppen unterteilt. Eine Betriebszustandsgruppe umfasst dabei diejenigen Anlagenkomponenten sowie die jeweils zwischengeschalteten Rohrleitungsabschnitte, die in einem bestimmten Betriebszustand verwendet werden. Als Betriebszustand ist dabei eine bestimmte Betriebsweise oder Fahrweise der Anlage bezeichnet, die von mindestens einer weiteren Betriebs- oder Fahrweise unterscheidbar ist. Dabei wird für jeden Betriebszustand ein zugehöriger Betriebszustandsgraph erstellt, welcher entsprechend nur die in dem jeweiligen Betriebszustand involvierten Prozessparameter als Knoten umfasst. Verschiedene Betriebszustände können sich dabei insbesondere dadurch unterscheiden, dass in jedem der Betriebszustände eine andere Untergruppe der Anlagenkomponenten in Betrieb ist, während die jeweils übrigen Anlagenkomponenten außer Betrieb sind. Die in einem Betriebszustand in Betrieb befindlichen Anlagenkomponenten können somit als Einheit aufgefasst werden, die eine Teilanlage bilden. Eine Betriebszustandsgruppe kann dabei aus einem oder mehreren der oben beschriebenen Untersysteme bestehen. Die entsprechenden Untersystemgraphen können hierbei optional zu einem Betriebszustandsgraphen der jeweils zugehörigen Betriebszustandsgruppe zusammengefasst werden. In diesem Fall bilden die Betriebszustandsgraphen als System von Gesamtgraphen das Verfahrensergebnis.

Da die Wirkbeziehungen von Pumpen und Ventilen bei einem gleichzeitigen Vorhandensein in einer Industrieanlage nicht eindeutig sind, hat es sich in diesem Falle als vorteilhaft gezeigt, dass das RI-Fließbild zur Erstellung von zwei Gesamtgraphen zweimal durchlaufen wird. Dabei werden beim ersten Durchlauf alle Komponenten mit Ausnahme der Pumpen abgearbeitet, wobei ein erster Gesamtgraph (nachfolgend: "Ventil-Gesamtgraph") erstellt wird. Beim zweiten Ablaufen des RI-Fließbildes werden alle Komponenten mit Ausnahme der Ventile abgearbeitet, wobei ein zweiter Gesamtgraph (nachfolgend: "Pumpen-Gesamtgraph") der Anlage erstellt wird. Die Begriffe "erster" und "zweiter" Durchlauf sind dabei nicht im Sinne einer zwingenden zeitlichen Reihenfolge zu verstehen. Insbesondere kann der "Pumpen-Gesamtgraph" im Rahmen der Erfindung auch zeitlich vor oder gleichzeitig mit (d. h. parallel zu) dem "Ventil-Gesamtgraph" erstellt werden. Bei einer komplexen Anlage mit mehreren Betriebszustandsgruppen, die jeweils aus mehreren Untersystemen gebildet sind, kann das System von Gesamtgraphen somit insbesondere einen Pumpen-Gesamtgraphen und einen Ventil-Gesamtgraphen für jede Betriebszustandsgruppe oder sogar für jedes Untersystem einer jeden Betriebszustandsgruppe umfassen.

In der Anlage vorhandene Regelkreise erschweren häufig die Erkennung und Analyse von Fehlern, da Abweichungen von Prozessparametern, die für den Fehler symptomatisch wären, ausgeregelt werden. In einer vorteilhaften Verfahrensvariante wird daher ein hypothetischer Wert eines durch eine Stellgröße geregelten Prozessparameters vor Eingreifen der Regelung ermittelt, indem der Effekt der Regelung rechnerisch kompensiert wird. Dies erfolgt dadurch, dass ausgehend von einem tatsächlichen (beobachteten) Wert der Stellgröße und einem tatsächlichen Wert des geregelten Prozessparameters unter Berücksichtigung der Wirkungsweise der Regelung auf den Wert des Prozessparameters vor Eingriff der Regelung zurückgerechnet wird.

Bezüglich einer Vorrichtung wird oben genannte Aufgabe erfindungsgemäß gelöst durch die Merkmale des Anspruchs 14. Danach umfasst die Vorrichtung eine Datenbank, in welcher das RI-Fließbild der Anlage sowie Komponentengraphen bzw. die diesen entsprechenden Komponentenadjazenzmatrizen hinterlegt sind. Zudem umfasst die Vorrichtung ein Erstellungsmodul, welches dazu ausgebildet ist, ein System von Gesamtgraphen der Anlage nach dem vorstehend beschriebenen erfindungsgemäßen Verfahren zu erstellen. Bevorzugt umfasst die Vorrichtung zusätzlich eine Diagnoseeinheit, welche dazu ausgebildet ist, einen aus dem oder jedem Gesamtgraphen der Anlage hervorgegangenen Diagnosegraphen zur Fehlerursachefindung auszuwerten.

Nachfolgend wird ein Ausführungsbeispiel der Erfindung anhand von Zeichnungen näher erläutert. Es zeigen:

| FIG 1 | ein erstes RI-Fließbild einer (Industrie-) Anlage mit einer Vielzahl von Anlagenkomponenten, welche über ein Rohrleitungssystem miteinander verbunden sind, |
|---|---|
| FIG 2 | in Darstellung als RI-Fließbild einen ersten Komponententyp, der einen Rohrleitungsabschnitt repräsentiert, |
| FIG 3 | einen dem Komponententyp gemäß FIG 2 zugeordneten Komponentengraph, |
| FIG 4 und 5 | in Darstellung gemäß FIG 2 bzw. 3 einen zweiten Komponententyp, der ein Handventil repräsentiert, |
| FIG 6 und 7 | in Darstellung gemäß FIG 2 bzw. FIG 3 einen dritten Komponententyp, der ein Stellventil repräsentiert, |
| FIG 8 | in Darstellung gemäß FIG 3 einen Komponentengraph eines vierten Komponententyps, der ein Stellventil charakterisiert, welches sich in Fließrichtung vor einem Behälter befindet, |
| FIG 9 | in Darstellung gemäß FIG 3 einen Komponentengraph eines fünften Komponententyps, der ein Stellventil charakterisiert, welches sich in Fließrichtung nach einem Behälter befindet, |
| FIG 10 und 11 | in Darstellung gemäß FIG 2 bzw. 3 einen sechsten Komponententyp, der eine Pumpe repräsentiert, |
| FIG 12 und 13 | in Darstellung gemäß FIG 2 bzw. 3 einen siebten Komponententyp, der einen Behälter repräsentiert, |
| FIG 14 und 15 | in Darstellung gemäß FIG 2 bzw. 3 einen achten Komponententyp, der ein Durchflussmessgerät repräsentiert, |
| FIG 16 | in Darstellung gemäß FIG 2 einen neunten Komponententyp, der ein Druckmessgerät repräsentiert, |
| FIG 17 | in Darstellung gemäß FIG 3 den neunten Komponententyp "Druckmessgerät" im Rahmen eines "Pumpen-Gesamtgraphen", |
| FIG 18 | in Darstellung gemäß FIG 3 den neunten Komponententyp "Druckmessgerät" im Rahmen eines "Ventil-Gesamtgraphen", |
| FIG 19 | in einem Flussdiagramm ein Verfahren zur Erstellung eines Systems von gerichteten, gewichteten Gesamtgraphen der Anlage anhand des RI-Fließbildes gemäß FIG 1, |
| FIG 20 | einen gerichteten, gewichteten "Pumpen-Gesamtgraphen" der Anlage, welcher einem ersten Betriebszustand zugeordnet ist, |
| FIG 21 | einen gerichteten, gewichteten "Ventil-Gesamtgraphen" der Anlage, welcher ebenfalls dem ersten Betriebszustand zugeordnet ist, |
| FIG 22 | einen weiteren gerichteten, gewichteten "Ventil-Gesamtgraphen" der Anlage, welcher einem zweiten Betriebszustand zugeordnet ist, |
| FIG 23 | ein RI-Fließbild einer weiteren (Industrie-) Anlage, |
| FIG 24 | einen gerichteten, gewichteten "Ventil-Gesamtgraphen" der Anlage gemäß FIG 23, |
| FIG 25 | eine Vorrichtung zur Unterstützung der Fehlerdiagnose einer Industrieanlage. |

Einander entsprechende Teile und Größen sind in allen Figuren stets mit den gleichen Bezugszeichen versehen.

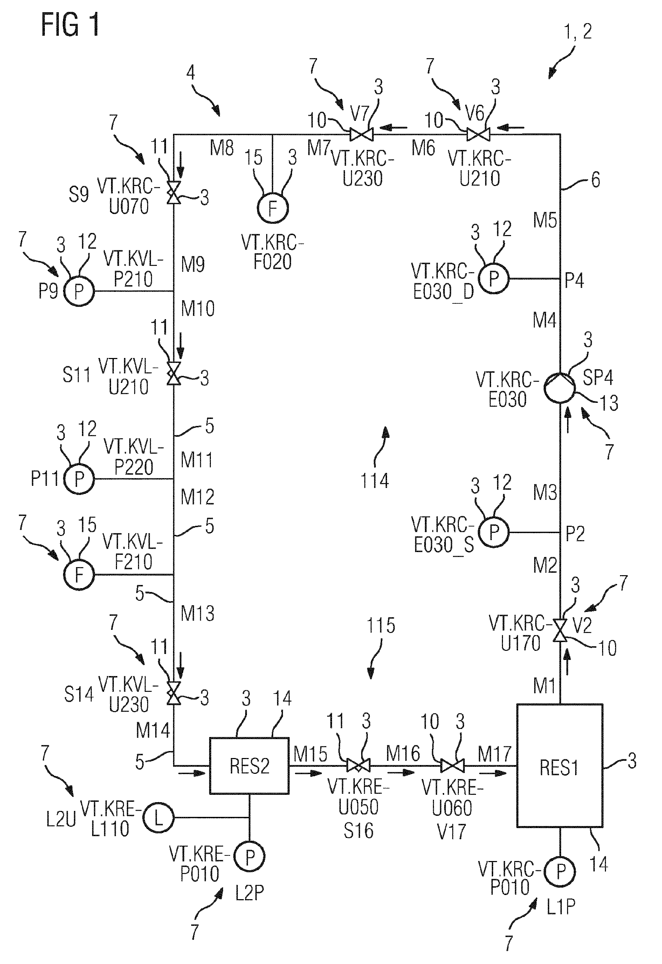

FIG 1 zeigt ein erstes RI-Fließbild 1, welches eine erste (Industrie-)Anlage 2 repräsentiert.

Das Fließbild 1 umfasst Symbole für eine Vielzahl von (Anlagen-)Komponenten 3, aus denen die Anlage 2 zusammengesetzt ist. Das Fließbild 1 umfasst des Weiteren Verbindungslinien, die ein Rohrleitungssystem 4 der Anlage 2, über das die Komponenten 3 miteinander verschaltet sind, symbolisiert.

Ausweislich des Fließbildes 1 umfasst das Rohrleitungssystem 4 eine Vielzahl von Rohrleitungsabschnitten 5, wobei jeder Rohrleitungsabschnitt 5 stets zwei Anlagenkomponenten 3 verbindet.

In dem Fließbild 1 ist somit festgehalten, welche Anlagenkomponenten 3 in der Anlage 2 miteinander verschaltet sind und in welcher rohrleitungstechnischen Anordnung dies erfolgt. In dem Fließbild 1 ist zudem durch Pfeile hinterlegt, in welcher Fließrichtung 6 die einzelnen Komponenten miteinander verbunden sind.

Sowohl den Anlagenkomponenten 3 als auch den Rohrleitungsabschnitten 5 sind jeweils ein oder mehrere Prozessparameter 7 zugeordnet, welche strömungsmechanische Eigenschaften (nämlich Drücke, Massendurchflussraten, etc.) eines in der Anlage zu verarbeitenden Fluides beschreiben.

Jede der einzelnen Anlagenkomponenten 3 entspricht jeweils einem abstrakten "Komponententypen", der die Art der spezifischen Anlagenkomponente und die jeweils zugeordneten abstrakten Prozessparameter 7 charakterisiert.

In dem hier dargestellten Beispiel umfasst die Anlage 2 ausweislich des Fließbilds 1 Anlagenkomponenten 3 folgender Komponententypen, welchen jeweils folgende Prozessparameter 7 zugeordnet sind:

- Rohrleitungsabschnitte 5, welchen als Prozessparameter 7 ein Massendurchfluss M zugeordnet ist,
- Handventile 10, welchen als Prozessparameter 7 jeweils eine Ventilstellung V zugeordnet ist,
- Stellventile 11, welchen als Prozessparameter 7 jeweils eine ansteuerbare Ventilstellung S zugeordnet ist,
- Drucksensoren 12, welchen als Prozessparameter 7 jeweils ein Druck P zugeordnet ist,
- eine ansteuerbare Pumpe 13, hier in Form einer Kreiselpumpe, welcher als Prozessparameter 7 ein Stellsignal SP zugeordnet ist,
- Behälter 14, welchen als Prozessparameter 7 jeweils ein Füllstand L zugeordnet ist,
- Durchflussmessgeräte 15, welchen jeweils als Prozessparameter 7 ein Massenstrom M zugeordnet ist.

Im Einzelnen setzt sich die Anlage 2 - in Strömungsrichtung aufgezählt - aus den in TAB 1 enthaltenen (spezifischen) Anlagenkomponenten 3 zusammen:

TAB 1: Komponenten 3 der Anlage 2, zugeordneter Komponententyp und zugeordneter Prozessparameter 7

| Bezeichnung der Anlagenkomponente | Komponententyp | Zugeordneter (spezifischer) Prozessparameter |
|---|---|---|
| VT.KRC-LP010 | Behälter 14 | Füllstand L1 |
| Ohne Bezeichnung | Rohrabschnitt 5 | Massenstrom M1 |
| VT.KRC-U170 | Handventil 10 | Ventilstellung V2 |
| Ohne Bezeichnung | Rohrabschnitt 5 | Massenstrom M2 |
| VT.KRC-E030 S | Drucksensor 12 | Druck P2 |
| Ohne Bezeichnung | Rohrabschnitt 5 | Massenstrom M3 |
| VT.KRC-E030 | Pumpe 13 | Stellsignal SP4 |
| Ohne Bezeichnung | Rohrabschnitt 5 | Massenstrom M4 |
| VT.KRC-030_D | Drucksensor 12 | Druck P4 |
| Ohne Bezeichnung | Rohrabschnitt 5 | Massenstrom M5 |
| VT.KRC-U210 | Handventil 10 | Ventilstellung V6 |
| Ohne Bezeichnung | Rohrabschnitt 5 | Massenstrom M6 |
| VT.KRC-U230 | Handventil 10 | Ventilstellung V7 |
| Ohne Bezeichnung | Rohrabschnitt 5 | Massenstrom M7 |
| VT.KRC-F020 | Durchflussmessgerät 15 | Massenstrom M8 |
| Ohne Bezeichnung | Rohrabschnitt 5 | Massenstrom M8 |
| VT.KRC-070 | Stellventil 11 | Ventilstellung S9 |
| Ohne Bezeichnung | Rohrabschnitt 5 | Massenstrom M9 |
| VT.KVL-P210 | Drucksensor 12 | Druck P9 |
| Ohne Bezeichnung | Rohrabschnitt 5 | Massenstrom M10 |
| VT.KVL-U210 | Stellventil 11 | Ventilstellung S11 |
| Ohne Bezeichnung | Rohrabschnitt 5 | Massenstrom M11 |
| VT.KVL-P220 | Drucksensor 12 | Druck P11 |
| Ohne Bezeichnung | Rohrabschnitt 5 | Massenstrom M12 |
| VT.KVL-F210 | Durchflussmessgerät 15 | Massenstrom M13 |
| Ohne Bezeichnung | Rohrabschnitt 5 | Massenstrom M13 |
| VT.KVL-U230 | Stellventil 11 | Ventilstellung S14 |
| Ohne Bezeichnung | Rohrabschnitt 5 | Massenstrom M14 |
| VT.KRE-P010 | Behälter 14 | Füllstand L2P, |
| VT.KRE-L110 | | Füllstand L2U |
| Ohne Bezeichnung | Rohrabschnitt 5 | Massenstrom M15 |
| VT.KRE-U050 | Stellventil 11 | Ventilstellung S16 |
| Ohne Bezeichnung | Rohrabschnitt 5 | Massenstrom M16 |
| VT.KRE-U060 | Handventil 10 | Ventilstellung V17 |
| Ohne Bezeichnung | Rohrabschnitt 5 | Massenstrom M17 |

Die Nomenklatur der in FIG 1 sowie TAB 1 aufgeführten Prozessparameter beruht hierbei auf folgenden Konventionen:

Bei einem ersten Teil der Prozessparameterbezeichnung handelt es sich um die übergreifende, allgemeine Bezeichnung des der jeweiligen Komponente 3 zugehörigen Prozessparameters 7. Der einem Ventil 10 zugeordnete Prozessparameter 7 ist somit stets mit "V" bezeichnet, der einem Stellventil 11 zugeordnete Prozessparameter 7 mit "S", der einem Drucksensor 12 zugeordnete Prozessparameter 7 mit "P", der einer Pumpe 13 zugeordnete Prozessparameter mit "SP" und der einem Behälter 14 zugeordnete Prozessparameter mit "L". Der einem Rohrleitungsabschnitt 5 zugeordnete Prozessparameter 7 ist mit "M" bezeichnet.

Ein zweiter Teil des Namens trägt eine Nummerierung x oder y, wobei sowohl x als auch y jeweils eine natürliche Zahl ist. Dabei wird jedem Behälter 14 eine Nummerierung y zugeordnet, während jedem Rohrleitungsabschnitt 5 die Nummerierung x zugeordnet wird.

Die weiteren Komponenten 3 werden entsprechend eines Massendurchflusses M nummeriert, auf den sie einwirken bzw. der auf sie einwirkt. Der einem (Stell-)Ventil 10, 11 oder einer Pumpe 13 zugeordnete Prozessparameter erhält hierbei stets die gleiche Ordnungszahl wie der Massenstrom Mx eines in Fließrichtung nachfolgenden Rohrleitungsabschnitts 5, während ein Drucksensor 12 die gleiche Ordnungszahl wie ein in Fließrichtung vorgeschalteter Rohrleitungsabschnitt 5 erhält. Sind einer Anlagenkomponente 3 mehrere Sensoren zur Erfassung des zugehörigen Prozessparameters 7 zugeordnet, so wird zu deren Unterscheidung ein dritter Namensteil angefügt, welcher das zugrunde liegende Messprinzip spezifiziert. So weist die Bezeichnung "LyP" ("level y pressure") auf eine Füllstandsmessung nach einem Druckmessprinzip hin, während die Bezeichnung "LyU" ("level y ultrasonic") auf eine Füllstandsmessung nach einem Ultraschallmessprinzip hindeutet.

Jedem Komponententyp ist weiterhin ein zunächst unspezifischer, allgemeiner Komponentengraph zugeordnet, in welchem hinterlegt ist, wie die dem jeweiligen Komponententyp zugeordnete Komponente 3 mit anderen Komponenten 3 (bzw. mit deren zugeordneten massenstromspezifischen Prozessparametern 7) wechselwirkt. In dem Komponentengraph ist - wie zuvor beschrieben - jedem betrachteten Prozessparameter 7 ein Knoten des Graphen zugeordnet, wobei Pfeile bzw. Kanten zwischen den einzelnen Knoten die Wechselwirkungen beschreiben. Eine positiv gewichtete Kante des Komponentengraphen repräsentiert dabei eine gleichsinnige Abweichungsänderung, während eine negativ gewichtete Kante eine gegensinnige Abweichungsänderung repräsentiert. Die unspezifischen Komponentengraphen werden durch Experimente oder mathematische Modelle ermittelt.

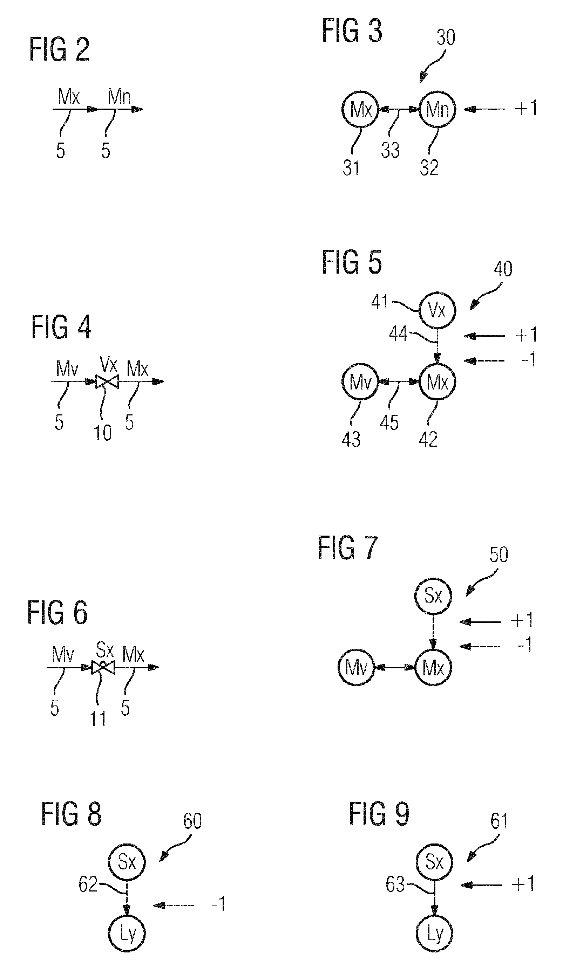

In den nachfolgenden FIG 2 bis 18 wird erläutert, welche Wechselwirkungen bzw. unspezifische Komponentengraphen den oben genannten Komponententypen zugeordnet sind. Knoten, welche beobachtbaren Prozessparametern 7 zugeordnet sind, sind in den FIG 2 bis 18 gestrichelt dargestellt. Weiterhin werden die Bezeichnungen v als x-1 (bzw. in Fließrichtung vorangehend) und n als x+1 (bzw. in Fließrichtung nachfolgend) definiert.

Die FIG 2 zeigt in RI-Fließbilddarstellung einen ersten Komponententyp, der allgemein einen Rohrleitungsabschnitt 5 mit zugeordnetem Massenstrom Mx sowie dessen Wechselwirkung mit einem nachgeschalteten Rohrleitungsabschnitt 5 mit Massenfluss Mn (d. h. M(x+1)) charakterisiert.

In FIG 3 ist ein diesem Komponententyp zugeordneter Komponentengraph 30 dargestellt. Der Komponentengraph 30 umfasst einen ersten Knoten 31, welcher dem Massenstrom Mx zugeordnet ist, sowie einen zweiten Knoten 32, welcher dem zweiten Massenstrom Mn zugeordnet ist. Eine positiv gewichtete "Doppelkante" 33 (bestehend aus zwei gegensätzlich gerichteten Kanten) zeigt an, dass die Wechselwirkung zwischen den beiden Rohrleitungsabschnitten 5 bzw. deren Massenströmen Mx, Mn gleichsinnig ist. D. h., eine positive Abweichung des einen Massenstroms bewirkt gemäß der Massenerhaltung eine positive Abweichung des jeweils anderen Massenstroms, während eine negative Abweichung des einen Massenstroms in einer negativen Abweichung des jeweils anderen Massenstroms resultiert.

Für die datenverarbeitungstechnische Handhabung in einem Rechner wird der Komponentengraph 30 in Form eines Prozessvariablenvektors $v_{Rx}$ sowie einer zugeordneten Adjazenzmatrix $A_{Rx}$ gemäß GLG 1 dargestellt:

$$v_{Rx} = \begin{pmatrix} Mx \\ Mn \end{pmatrix} \qquad\qquad A_{Rx} = \begin{pmatrix} 0 & 1 \\ 1 & 0 \end{pmatrix}$$

GLG 1

Die Außerdiagonal-Elemente der Adjazenzmatrix $A_{Rx}$ mit Wert "1" entsprechen dabei der Doppelkante 33. Der Prozessvariablenvektor $v_{Rx}$ zeigt dabei an, welchen Prozessparametern die jeweiligen Einträge in der Adjazenzmatrix zugeordnet sind.

Ein Eintrag in der zweiten Spalte der ersten Zeile entspricht dabei der Gewichtung einer Kante von dem dem ersten Prozessparameter des Prozessparametervektors entsprechenden Knoten zu dem dem zweiten Prozessparameter des Prozessparametervektors entsprechenden Knoten.

Die FIG 4 zeigt in RI-Fließbilddarstellung einen zweiten Komponententyp, der allgemein ein Handventil 10 mit zugeordneter Ventilstellung Vx und dessen Wechselwirkung mit einem vorgeschalteten Rohrleitungsabschnitt 5 mit Massenstrom Mv sowie einem nachgeschalteten Rohrleitungsabschnitt 5 mit Massenstrom Mx charakterisiert.

In FIG 5 ist ein zugehöriger Komponentengraph 40 dargestellt. Der Komponentengraph 40 umfasst einen Knoten 41, welcher der Ventilstellung V zugeordnet ist, einen Knoten 42, welcher dem Massenstrom Mx zugeordnet ist, sowie einen Knoten 43, welcher dem Massenstrom Mv zugeordnet ist. Die Ventilstellung V ist derart definiert, dass bei steigendem Wert der Ventilstellung V das Ventil 10 zunehmend geschlossen wird. Die Ventilstellung V wirkt somit gegensinnig auf den Massenstrom Mx in dem dem Ventil 10 nachgeschalteten Rohrleitungsabschnitt 5. Gemäß dieser gegensinnigen Beeinflussung ist eine von dem Knoten 41 gerichtete Kante 44 zu dem Knoten 42 negativ (-1) gewichtet. Der Einfluss des Knotens 41 auf den vorgeschalteten Rohrleitungsabschnitt 5 bzw. auf den diesem zugeordneten Massenstrom Mv wird indirekt über eine zwischen den Knoten 42 und 43 verlaufende (positiv gewichtete) Doppelkante 45 dargestellt.

Ein zugeordneter Prozessparametervektor $v_{Vx}$ sowie eine zugeordnete Adjazenzmatrix $A_{Vx}$ haben die folgende Form:

$$v_{Vx} = \begin{pmatrix} Mv \\ Mx \\ Vx \end{pmatrix} \qquad\qquad A_{Vx} = \begin{pmatrix} 0 & 1 & 0 \\ 1 & 0 & 0 \\ 0 & -1 & 0 \end{pmatrix}$$

GLG 2

Die FIG 6 zeigt in RI-Fließbilddarstellung einen dritten Komponententyp, der allgemein ein Stellventil 10 mit zugeordneter Ventilstellung Sx und dessen Wechselwirkung mit einem vorgeschalteten Rohrleitungsabschnitt 5 mit Massenstrom Mv sowie einem nachgeschalteten Rohrleitungsabschnitt 5 mit Massenstrom Mx charakterisiert. Ein zugeordneter Komponentengraph 50 ist gemäß FIG 7 analog zu dem Komponentengraph 40 eines Handventils 10 aufgebaut.

FIG 8 zeigt in einem Komponentengraphen 60 einen vierten Komponententypen, der die Wechselwirkung eines Stellventils 11 mit einem in Fließrichtung unmittelbar nachgeschalteten Behälter 14 beschreibt. FIG 9 zeigt dagegen in einem Komponentengraphen 61 einen fünften Komponententypen, der die Wechselwirkung eines Stellventils 11 mit einem in Fließrichtung unmittelbar vorgeschalteten Behälter 14 beschreibt. FIG 8 ist zu entnehmen, dass im Falle eines vor einem Behälter 14 befindlichen Stellventils 11 eine weit geöffnete Stellung (Ventilstellung S niedrig) einen starken Zufluss in den Behälter 14 und damit ein Ansteigen des Füllstands Ly bewirkt. Diese gegensinnige Auswirkung ist durch eine negativ gewichtete Kante 62 gekennzeichnet. FIG 9 ist zu entnehmen, dass dagegen ein weit geöffnetes Stellventil 11, welches sich nach einem Behälter 14 befindet, einen erhöhten Ausfluss aus dem Behälter 14 und somit eine Reduzierung des Füllstands Ly bewirkt. Diese gleichsinnige Wirkungsweise ist durch eine positiv gewichtete Kante 63 gekennzeichnet.

Jeweils zugehörige Prozessparametervektoren $v_{STy}$ (für ein Stellventil 11 mit nachgeschaltetem Behälter 14) und $v_{TSy}$ (für ein Stellventil 11 mit vorgeschaltetem Behälter 14) sowie jeweils zugeordnete Adjazenzmatrizen $A_{STy}$ bzw. $A_{TSy}$ haben die Form:

$$v_{STy} = v_{TSy} = \begin{pmatrix} Ly \\ Sx \end{pmatrix} \qquad A_{STy} = \begin{pmatrix} 0 & 0 \\ -1 & 0 \end{pmatrix} \qquad A_{TSy} = \begin{pmatrix} 0 & 0 \\ 1 & 0 \end{pmatrix}$$

GLG 3

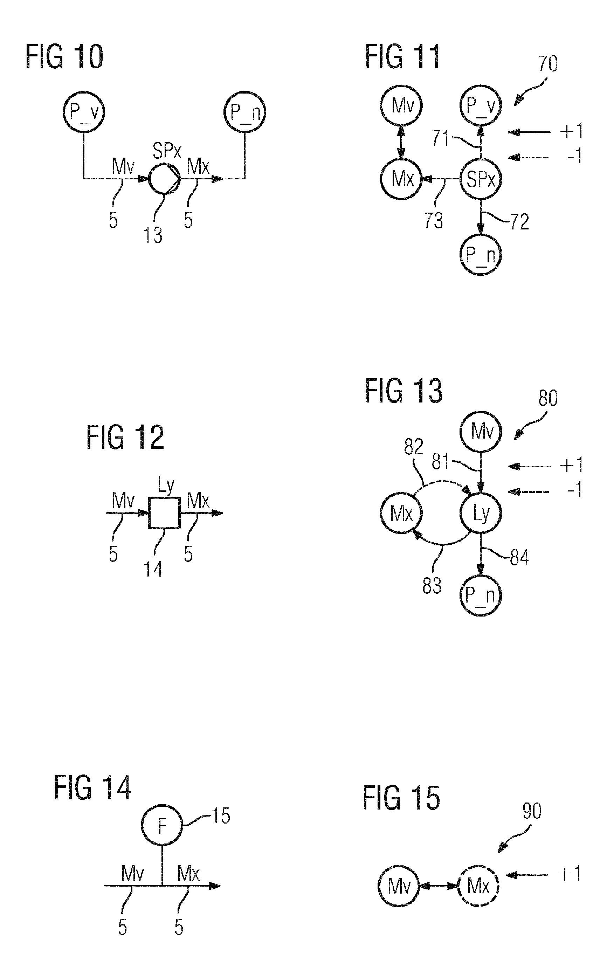

Die FIG 10 zeigt in RI-Fließbilddarstellung einen sechsten Komponententyp, der allgemein eine ansteuerbare (Kreisel-) Pumpe 13 mit zugeordnetem Stellsignal SPx und deren Wechselwirkung mit einem vorgeschalteten Rohrleitungsabschnitt 5 mit Massenstrom Mv sowie einem nachgeschalteten Rohrleitungsabschnitt 5 mit Massenstrom Mx sowie mit einem vorgeschalteten Druckmessgerät 12 mit Druck P_v (_v = x-1, x-2, ...) sowie einem nachgeschalteten Druckmessgerät 12 mit Druck P_n (_n = x, x+1, x+2, ...) charakterisiert. Einem zugeordneten Komponentengraphen 70 (FIG 11) ist zu entnehmen, dass die Pumpe 13 bzw. deren Stellsignal SPx auf beliebige (stromabwärts gemessene) Drücke P_v eine gegensinnige Wirkung hat, während die Pumpe 13 bzw. deren Stellsignal SPx auf beliebige stromaufwärts gemessene Drücke P_n eine gleichsinnige Wirkung hat. D. h., dass bei einer erhöhten Pumpenleistung der Pumpe 13 sich ein Druck Pv vor der Pumpe 13 verringert (gekennzeichnet durch eine negativ gewichtete Kante 71), während eine Erhöhung der Pumpenleistung eine Erhöhung des nach der Pumpe 13 gemessenen Drucks Px bewirkt (gekennzeichnet durch eine positiv gewichtete Kante 72). Auf die Massenströme Mx und Mv ist die Wirkung gemäß einer Kante 73 ebenfalls gleichsinnig.

Ein dem Komponentengraphen zugeordneter Prozessvariablenvektor $v_{Kx}$ sowie eine zugeordnete Adjazenzmatrix $A_{Kx}$ hat folgende Form:

$$v_{Kx} = \begin{pmatrix} Mv \\ Mx \\ SPx \\ P\_v \\ P\_n \end{pmatrix} \qquad A_{Kx} = \begin{pmatrix} 0 & 1 & 0 & 0 & 0 \\ 1 & 0 & 0 & 0 & 0 \\ 0 & 1 & 0 & -1 & 1 \\ 0 & 0 & 0 & 0 & 0 \\ 0 & 0 & 0 & 0 & 0 \end{pmatrix}$$

GLG 4

Die Erfassung der Drücke P_v und P_n ist optional. Entsprechend können Werte für einen oder beide Drücke P_v und P_n fehlen. In diesem Fall werden der entsprechende Eintrag im Vektor $v_{Kx}$ und die entsprechende Zeile und Spalte in der Adjazenzmatrix $A_{Kx}$ entfernt.

FIG 12 zeigt einen siebten Komponententyp, der einen Behälter 14 und dessen Wechselwirkung mit einem vorgeschalteten Rohrleitungsabschnitt 5 mit Massenstrom Mv sowie einem nachgeschalteten Rohrleitungsabschnitt 5 mit Massenstrom Mx charakterisiert. Die Wechselwirkungen zwischen dem dem Behälter 14 zugeordneten Füllstand Ly und den Massenströmen Mx, Mv sind einem Komponentengraphen 80 (FIG 13) zu entnehmen. Demnach erhöht ein zulaufender Massenstrom Mv den Füllstand Ly im Behälter 14 gemäß einer positiv gewichteten Kante 81 ebenso wie ein reduzierter Auslauf aus dem Behälter gemäß einer negativ gewichteten Kante 82. Weiterhin resultiert ein erhöhter Füllstand Ly gemäß einer positiv gewichteten Kante 83 in einem erhöhten Massenstrom Mx in dem dem Behälter 14 nachgeschalteten Rohrleitungsabschnitt 5. Dem Komponentengraphen 80 ist zudem zu entnehmen, dass sich dem Behälter 14 in Fließrichtung nachfolgenden Drucksensoren 12 zugeordnete Drücke P_n gemäß einer positiv gewichteten Kante 84 gleichsinnig mit dem Füllstand Ly ändern. Ein zugeordneter Prozessparametervektor $v_{T1y}$ sowie eine zugeordnete Adjazenzmatrix $A_{T1y}$ haben folgende Form:

$$v_{T1y} = \begin{pmatrix} Mv \\ Mx \\ Ly \\ P\_n \end{pmatrix} \qquad A_{T1y} = \begin{pmatrix} 0 & 0 & 1 & 0 \\ 0 & 0 & -1 & 0 \\ 0 & 1 & 0 & 1 \\ 0 & 0 & 0 & 0 \end{pmatrix}$$

GLG 5

FIG 14 zeigt in einem weiteren Fließbildausschnitt den ein Durchflussmessgerät 15 der Art nach beschreibenden achten Komponententyp. Einem in FIG 15 dargestellten, dem Durchflussmessgerät 15 zugeordneten Komponenten-graphen 90 ist zu entnehmen, dass ein dem Durchflussmessgerät 15 zugeordneter Prozessparameter (Massenstrom) nicht als separater Knoten dargestellt wird. Vielmehr wird lediglich der dem nachfolgenden Rohrleitungsabschnitt 5 zugeordnete Massenstrom Mx als beobachtbar gekennzeichnet (dargestellt durch einen gestrichelten Kreis). Ein zugehöriger Prozessparametervektor $v_{Mx}$ sowie eine zugeordnete Adjazenzmatrix $A_{Mx}$ bestimmen sich demnach analog zu GLG 1:

$$v_{Mx} = v_{Rx} \qquad\qquad A_{Mx} = A_{Rx}$$

GLG 6

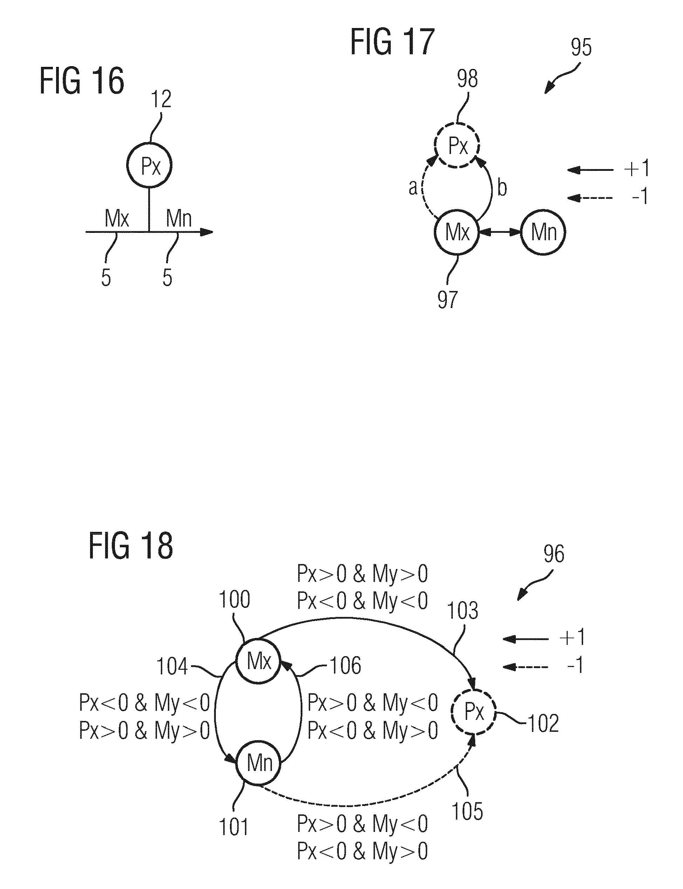

In FIG 16 ist in RI-Fließbilddarstellung ein neunter Komponententyp dargestellt, der allgemein einen Drucksensor 12 und dessen Wechselwirkung mit zwei angrenzenden Rohrleitungsabschnitten 5 beschreibt.

Drucksensoren 12 stellen insofern eine Besonderheit dar, da ein Zusammenhang zwischen einem von einem Drucksensor erfassten Druck und einem Massendurchfluss in einer Anlage, welche sowohl Ventile als auch Pumpen umfasst, nicht eindeutig ist, sondern vielmehr auch von der Lage der einzelnen Komponenten zueinander abhängt. Es zeigt sich, dass unter steigender Pumpenleistung und entsprechend steigendem Massenstrom ein in Fließrichtung der Pumpe nachgeschalteter Drucksensor einen steigenden Druck erfasst, während ein der Pumpe vorgeschalteter Drucksensor einen stetig fallenden Druck erfasst. Wird dagegen bei einer gleichbleibenden Pumpenleistung der Massenstrom durch Öffnen eines Ventils erhöht, so resultiert dies bei Drucksensoren, welche dem Ventil in Fließrichtung vorgeschaltet sind, in einer Erniedrigung des Drucks, während dem Ventil in Fließrichtung nachgeschaltete Drucksensoren eine Erhöhung des Drucks erfassen.

Um die Wirkungsweise von Pumpen und Ventilen zu entkoppeln, werden daher für jede Anlage zwei Teil-Graphen erstellt, wobei ein erster "Pumpen-Graph" alle Komponenten, insbesondere mindestens eine Pumpe, jedoch keine Ventile bzw. Stellventile umfasst, während ein zweiter "Ventil-Graph" alle Komponenten, insbesondere mindestens ein Ventil oder Stellventil, jedoch keine Pumpe umfasst.

Dementsprechend werden einem beliebigen Drucksensor 12 zwei unterschiedliche Komponentengraphen 95 (FIG 17) bzw. 96 (FIG 18) zugeordnet. Der Komponentengraph 95 dient zur Darstellung des Drucksensors 12 bzw. dessen zugeordneten Drucks Px im Rahmen eines Pumpen-Graphen. Der Komponentengraph 95 umfasst einen Knoten 97, welcher dem dem Drucksensor 12 vorgeschalteten Rohrleitungsabschnitt 5 bzw. dessen zugehörigem Massenstrom Mx zugeordnet ist, sowie einen Knoten 98, welcher dem durch den Drucksensor 12 erfassten (und somit als beobachtbar gekennzeichneten) Druck Px zugeordnet ist. Der Komponentengraph 95 weist dabei eine erste Kante a von dem Knoten 97 zu dem Knoten 98 auf, welche negativ gewichtet ist, wobei diese Kante a nur dann Gültigkeit besitzt, wenn der zugehörige Drucksensor 12 in Fließrichtung vor der mindestens einen Pumpe 13 angeordnet ist. Eine zweite, positiv gewichtete Kante b besitzt dagegen nur dann Gültigkeit, wenn der zugehörige Drucksensor 12 in Fließrichtung nach der mindestens einen Pumpe 13 angeordnet ist. Ein zugeordneter unspezifischer Prozessparametervektor $v_{PP_x}$ und eine zugeordnete Adjazenzmatrix $A_{PP_x}$ zur Beschreibung eines beliebigen Drucksensors 12 in einem Pumpen-Graphen haben die Form:

$$v_{PPx} = \begin{pmatrix} Mx \\ Mn \\ Px \end{pmatrix} \qquad A_{PPx} = \begin{pmatrix} 0 & 1 & a \text{ oder } b \\ 1 & 0 & 0 \\ 0 & 0 & 0 \end{pmatrix}$$

GLG 7

Der Komponentengraph 96 zur Beschreibung des Drucksensors 12 in einem Ventil-Graphen umfasst ebenfalls einen Knoten 100 (Mx), einen Knoten 101 (Mn) sowie einen - als beobachtbar gekennzeichneten - Knoten 102 (Px). Weiterhin sind mit Bedingungen verknüpfte Kanten vorgesehen, wobei eine Kante jeweils nur dann berücksichtigt wird, wenn die daran geknüpften Bedingungen erfüllt sind. In den dargestellten Bedingungen bezeichnet Px den beobachtbaren Druck des Drucksensors 12, während My einen beobachtbaren Massenstrom bezeichnet, der sich gleichsinnig mit dem entsprechenden Massenstrom Mx verändert. Eine einer positiv gewichteten Kante 103 zugeordnete Bedingung dient dabei im Wesentlichen dazu, rückzuschließen, ob sich der Druck Px gleichsinnig mit dem Massenstrom My und somit mit dem dem Drucksensor 12 vorgeschalteten Massenstrom Mx verändert, ob sich der Drucksensor 12 also in Fließrichtung hinter einem seine Ventilstellung V verändernden (Stell-) Ventil 10 bzw. 11 der Anlage 2 befindet. In diesem Fall haben sowohl die Kante 103 als auch eine Kante 104 Gültigkeit. Ändert sich der Druck Px dagegen gegensinnig zu dem Massenstrom My bzw. Mx, dann ist davon auszugehen, dass sich der Drucksensor 12 vor einem seine Ventilstellung V verändernden (Stell-) Ventil 10, 11 befindet. In diesem Falle haben eine negativ gewichtete Kante 105 als auch eine Kante 106 Gültigkeit.

Im Sinne der nachfolgenden Auswertung eines solchen Ventil-Graphen können auch nur diejenigen Kanten abgelaufen werden, welche unter den oben beschriebenen Bedingungen vorhanden sind. Ein entsprechender Prozess-sparametervektor $v_{PV_x}$ sowie eine Adjazenzmatrix $A_{PV_x}$ haben folgende Form:

$$v_{PVx} = \begin{pmatrix} Mx \\ Mn \\ Px \end{pmatrix} \qquad A_{PVx} = \begin{pmatrix} 0 & 1 & 1 \\ 1 & 0 & -1 \\ 0 & 0 & 0 \end{pmatrix}$$

GLG 8

Um darzustellen, wie die einzelnen Komponenten 3 innerhalb der Anlage 2 miteinander wechselwirken, können die einzelnen Komponentengraphen 30, 40, 50, 60, 61, 70, 80, 90, 95, 96 zu einem Gesamtgraphen zusammengeführt werden.

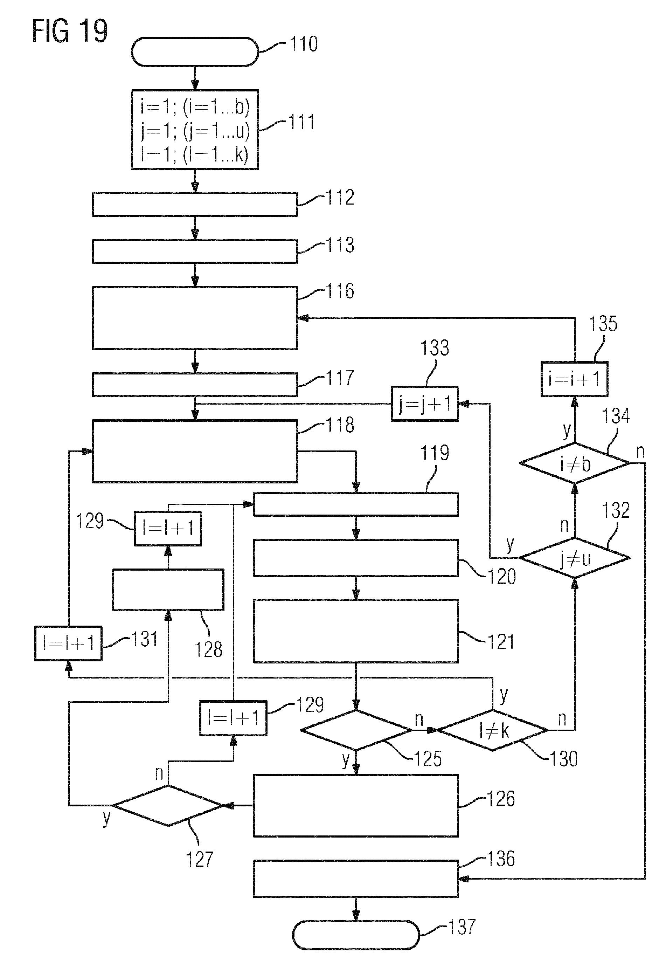

Eine automatisierte Erstellung dieses Gesamtgraphen erfolgt nach einem anhand von FIG 19 beschriebenen (Erstellungs-) Verfahren:

Nach einem Programmstart 110 werden zunächst in einem ersten Schritt 111 Zählvariablen i, j, l jeweils auf 1 gesetzt.

In einem zweiten Schritt 112 wird auf das (als XML-Datei vorliegende) RI-Fließbild 1 der Industrieanlage 2 zugegriffen, wobei alle den Komponenten 3 und Rohrleitungsabschnitten 5 der Anlage 2 zugeordneten Prozessparameter 7 eindeutig gemäß der vorstehend eingeführten Nomenklatur bezeichnet und nummeriert werden. Die oben allgemein verwendeten Variablen x und y werden im Schritt 112 nach folgender Vorgehensweise durchnummeriert:

Zunächst werden alle den Behältern 14 zugeordneten Prozessparameter Ly durchnummeriert, wobei y von 1 bis t läuft. Dabei entspricht t der Anzahl der in der Anlage vorhandenen Behälter 14.

Anschließend werden alle den Rohrleitungsabschnitten 5 zugeordneten Massenströme Mx durchnummeriert, wobei x von 1 bis m läuft. Dabei entspricht m der Anzahl der in der Anlage vorhandenen Rohrleitungsabschnitte 5. Dabei beginnt die Nummerierung (x=1) in Fließrichtung hinter einem Behälter 14. Mündet ein Rohrleitungsabschnitt 5 (bzw. der zugeordnete Massenstrom Mx) in einen Behälter 14, wird die Nummerierung

- hinter diesem (falls ein noch nicht berücksichtigter Teil der Rohrleitung aus dem Behälter 14 herausführt) oder
- hinter einem weiteren Behälter 14 (sofern noch ein unberücksichtigter Behälter 14 vorhanden ist) oder
- an einer Rohrleitungsverzweigung fortgesetzt.

In einem dritten Schritt 113 werden die Komponenten der Anlage 2 in b Betriebszustandsgruppen unterteilt, wobei den Betriebszustandsgruppen die Zählvariable i zugeordnet wird. Vorzugsweise erfolgt dies automatisch, sofern das Automatisierungssystem die Betriebszustände "kennt". Um eine automatisierte Definition der Betriebszustandsgruppen zu ermöglichen, können die Betriebszustände beispielsweise als Rezepturschritte eines Batch-Systems (gemäß ISA88) oder als Schritte eines SFCs (Sequential Flow Chart) formuliert und in computerlesbarer Form im Automatisierungssystem hinterlegt werden. In diesen Fällen gibt das Automatisierungssystem Ventilstellungen und Pumpenleistungen für jeden Betriebszustand automatisch vor. Andernfalls ist aber auch eine manuelle Festlegung möglich.

Eine Betriebszustandsgruppe umfasst dabei eine Gruppe von Anlagenkomponenten 3, welche in einem bestimmten Betriebszustand verwendet werden, sowie weitere Anlagenkomponenten 3, welche zwar in dem jeweiligen Betriebszustand nicht verwendet werden, diesen jedoch beeinflussen können.

In dem hier dargestellten Beispiel kann die Anlage 2 entweder in einem ersten Betriebszustand A oder in einem zweiten Betriebszustand B betrieben werden.

In dem Betriebszustand A wird ein in der Anlage 2 befindliches Fluid mit Hilfe der Pumpe 13 (mit zugeordnetem Prozessparameter SP4) aus dem mit "RES1" bezeichneten ersten Behälter 14 in den mit "RES2" bezeichneten zweiten Behälter 14 gefördert, wobei das mit "VT.KRE-U050" bezeichnete Stellventil 11 geschlossen ist.

Demnach umfasst eine erste Betriebszustandsgruppe 114 (FIG 1) (i=1) alle Anlagenkomponenten 3 und Rohrabschnitte 5, über welche der Behälter 14 mit der Bezeichnung "RES1" in Flussrichtung mit dem Behälter 14 mit der Bezeichnung "RES2" verbunden ist.

In dem Betriebszustand B wird anschließend das Fluid ausgehend von dem Behälter 14 mit der Bezeichnung "RES2" in den Behälter 14 mit der Bezeichnung "RES1" gefüllt, wobei nun das mit "VT.KRE-U050" bezeichnete Stellventil 11 geöffnet ist. Zudem sind im zweiten Betriebszustand B die mit "VT.KRC-U170" und "VT.KVL-U230" bezeichneten Hand- bzw. Stellventile (mit zugeordneten Prozessparametern V2 bzw. S14) geschlossen.

Eine zweite Betriebszustandsgruppe 115 umfasst demnach alle Anlagenkomponenten 3 und Rohrabschnitte 5, über welche der Behälter 14 mit der Bezeichnung "RES2" in Flussrichtung mit dem Behälter 14 mit der Bezeichnung "RES1" verbunden ist.

Die Behälter 14, genauer die darin befindlichen Füllstandsmessgeräte mit den Bezeichnungen "VT.KRC-P010" bzw. "VT.KRE-P010" und "VT.KRE-L110", gehören jeweils beiden Betriebszustandsgruppen 114 und 115 an.

Ferner gehört das mit "VT.KRE-U050" bezeichnete Stellventil 11 der ersten Betriebszustandsgruppe 114 als Abgrenzung an, zumal dieses Ventil, insbesondere in einem Fehlerfall, die Prozessparameter 7 der in dem Betriebszustand A verwendeten Komponenten 3 beeinflussen kann. Ebenso gehören die mit "VT.KRC-U170" und "VT.KVL-U230" bezeichneten Hand- bzw. Stellventile der zweiten Betriebszustandsgruppe 115 als Abgrenzungen an, zumal diese Ventile, insbesondere in einem Fehlerfall, die Prozessparameter 7 der in dem Betriebszustand B verwendeten Komponenten 3 beeinflussen können.

Der Übersichtlichkeit halber wird für jede Betriebszustandsgruppe ein separater Betriebszustands-Graph erstellt, welcher wiederum jeweils zwei Teil-Graphen umfasst, nämlich einen Pumpen-Graphen sowie einen Ventil-Graphen. Dementsprechend werden in einem anschließenden Schritt 116 für die i-te Betriebszustandsgruppe je nach Art und Anzahl der Anlagenkomponenten 3 dieser Gruppe zwei Prozessvariablenvektoren $V_{SDG(i)V}$ und $V_{SDG(i)P}$ erstellt. Dabei umfasst der erste Vektor $V_{SDG(i)V}$ alle Komponenten bzw. zugeordnete Prozessparameter der i-ten Betriebszustandsgruppe mit Ausnahme der Pumpen (bzw. der Pumpensignale SP), während $V_{SDG(i)P}$ gemäß GLG 9 alle Komponenten der i-ten Betriebszustandsgruppe mit Ausnahme von Ventilen (bzw. der Ventilstellungen) umfasst. Zudem umfasst jeder der Vektoren $V_{SDG(i)V}$ bzw. $V_{SVG(i)P}$ diejenigen Anlagenkomponenten, welche die Betriebszustandsgruppe begrenzen und somit noch auf diese einwirken oder Randbedingungen der Betriebszustandsgruppe messen können, welche aber selbst nicht in dem zugehörigen Betriebszustand verwendet werden. Die in den Vektoren $V_{SDG(i)V}$ bzw. $V_{SDG(i)P}$ enthaltenen Prozessparameter 7 entsprechen dabei jeweils Knoten des zu erstellenden Graphen.

$$V_{SDG(i)V} = \begin{pmatrix} Mx \\ \vdots \\ Lx \\ \vdots \\ Px \\ \vdots \\ Vx \\ \vdots \\ Sx \\ \vdots \\ Pv \\ \vdots \end{pmatrix} \qquad V_{SDG(i)P} = \begin{pmatrix} Mx \\ \vdots \\ Lx \\ \vdots \\ Px \\ \vdots \\ SPx \\ Pv \\ \vdots \end{pmatrix} \qquad \text{GLG } 9$$

Weiterhin werden im Schritt 116 zwei leere Adjazenzmatrizen $A_{SDG(i)V}$ sowie $A_{SDG(i)P}$ als Nullmatrizen erstellt, deren Reihen- und Spaltenzahl jeweils der Länge des Vektors $v_{SDG(i)V}$ bzw. $V_{SDG(i)P}$ entspricht.

Im allgemeinen Fall wird anschließend in einem weiteren Schritt 117 die i-te Betriebszustandsgruppe in u Untersysteme unterteilt, wobei jedes Untersystem wiederum einen Teil der der i-ten Betriebszustandsgruppe zugehörigen Anlagenkomponenten 3 umfasst. Alle Anlagenkomponenten 3 eines Untersystems sind dabei jeweils durch Rohrleitungsabschnitte 5 zumindest indirekt miteinander verbunden. Als Grenze bzw. Grenzkomponente eines ersten Untersystems zu einem zweiten Untersystem wird dabei jeweils ein Behälter 14 herangezogen. Der zwei Untersysteme voneinander abgrenzende Behälter 14 gehört hierbei jeweils stets beiden angrenzenden Untersystemen an. Die Unterteilung der Betriebszustandsgruppen in Untersysteme wird durch das Automatisierungssystem automatisch anhand des - als XML-Datei hinterlegten - RI-Fließbildes vorgenommen.

Im Beispiel gemäß FIG 1 wird in der ersten Betriebszustandsgruppe allerdings lediglich ein einziges Untersystem gefunden.

Den einzelnen Untersystemen wird die Zählvariable j zugeordnet, wobei j von 1 bis u läuft, wobei u der Anzahl der Untersysteme in der jeweiligen übergeordneten Betriebszustandsgruppe entspricht.

In der nachfolgenden Schrittabfolge wird das j-te Untersystem, welches k Anlagenkomponenten 3 umfasst, abgearbeitet. Den Anlagenkomponenten 3 wird die Zählvariable l zugeordnet.

Dabei werden im Schritt 118 als Startpunkt ein Behälter 14 mit einem Auslauf in das betreffende j-te Untersystem oder - falls kein unberücksichtigter Behälter mehr vorhanden ist - eine Rohrleitungsverzweigung gewählt. In einem nachfolgenden Schritt 119 werden für die l-te Anlagenkomponente 3 gemäß ihres Komponententyps der zunächst unspezifische Prozessparametervektor sowie die unspezifische Adjazenzmatrix gesucht.

Im folgenden Schritt 120 wird für die l-te Anlagenkomponente 3 der Prozessparametervektor spezifiziert. Dabei werden zum einen die unspezifischen Namen der Variablen im Prozessparametervektor der l-ten Komponente an die tatsächlichen Namen - gemäß ihrer eindeutigen Nummerierung aus Schritt 112 - angepasst. Zudem wird ggf. die Anzahl und ggf. die Position von den in dem j-ten Untersystem vorhandenen Drucksensoren 12 berücksichtigt.

Beispielsweise werden für die Pumpe 13 in dem Fließbild 1 aus FIG 1 der Prozessparametervektor $v_{Kx}$ gemäß GLG 4 als Prozessparametervektor $v_{K4}$ und die Komponentenadjazenzmatrix $A_{Kx}$ aus GLG 4 zu $A_{K4}$ spezifiziert:

$$v_{K4} = \begin{pmatrix} M_3 \\ M_4 \\ SP_4 \\ P_2 \\ P_4 \\ P_9 \\ P_{11} \end{pmatrix} \qquad A_{K4} = \begin{pmatrix} 0 & 1 & 0 & 0 & 0 & 0 & 0 \\ 1 & 0 & 0 & 0 & 0 & 0 & 0 \\ 0 & 1 & 0 & -1 & 1 & 1 & 1 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{pmatrix}$$

GLG 10

Im Spezifizierungsschritt wurden "P_v" durch "$P_2$" und "P_n" durch "$P_4$", "$P_9$" und "$P_{11}$" ersetzt.

Entsprechend der Spezifizierung werden in einem weiteren Schritt 121 die Eintragungen der nun spezifizierten Komponentenadjazenzmatrizen an die entsprechenden Positionen der Adjazenzmatrix $A_{SDG(i)V}$ bzw. $A_{SDG(i)P}$ übertragen. Eine Eintragung, welche in der Komponentenadjazenzmatrix einer Kante von einem ersten spezifischen Prozessparameter zu einem zweiten spezifischen Prozessparameter entspricht, wird dabei an einer Position der Adjazenzmatrix $A_{SDG(i)V}$ bzw. $A_{SDG(i)P}$ eingetragen, welche ebenfalls einer Kante von demselben ersten Prozessparameter zu demselben zweiten Prozessparameter entspricht.

In einer anschließenden Abfrage 125 wird abgefragt, ob es sich bei der l-ten Komponente nicht um einen Behälter bzw. Tank handelte. Ist diese Bedingung erfüllt (Abzweigung y), ist die l-te Komponente also kein Tank, so wird in Schritt 126 in Fließrichtung entlang eines von der l-ten Komponente abgehenden Rohrleitungsabschnitts 5 die nächste Anlagenkomponente 3 gesucht, wobei ein Ort einer gemäß einer Abfrage 127 ggf. erkannten Rohrleitungsverzweigung in einem Schritt 128 gespeichert wird. Bei der Verzweigung kann es sich beispielsweise um ein T-Stück einer Rohrleitung oder um ein Drei-Wege-Ventil handeln. Die Verzweigungen sind entsprechend als Anlagenkomponenten 3 hinterlegt.

Im Schritt 129 werden anschließend die Zählvariable l um 1 erhöht und somit die Schritte 119 bis 121 für die nächste Anlagenkomponente 3 des j-ten Untersystems durchlaufen.

Handelt es sich bei der l-ten Komponente um einen Behälter (Abzweigung n bei Abfrage 125), so wird in einer darauffolgenden Abfrage 130 geprüft, ob es sich noch nicht um die letzte Komponente k des j-ten Untersystems handelte (1 ungleich k). Falls ja (Abzweigung y der Abfrage 130) wird wiederum in einem Schritt 131 die Zählvariable l um 1 erhöht und ein weiterer Startpunkt des j-ten Untersystems gesucht, nämlich wiederum entweder ein weiterer Behälter oder eine ggf. gespeicherte Rohrleitungsverzweigung.

Ausgehend von diesem neuen Startpunkt werden wiederum die Schritte 119 bis 126 so lange durchlaufen, bis wiederum ein Behälter erreicht wird.

Handelt es sich bei der l-ten Anlagenkomponente um einen Behälter und sind alle Komponenten des j-ten Untersystems abgearbeitet (Abzweigung n der Abfrage 130), wird in einer weiteren Abfrage 132 geprüft, ob noch nicht alle Untersysteme abgearbeitet sind (j ungleich u). Ist j ungleich u (Abzweigung y bei Abfrage 132) werden im Schritt 133 j um 1 erhöht und die Schritte 118 bis 126 für das nächste Untersystem durchlaufen, bis wiederum alle k Komponenten des Untersystems abgearbeitet sind.

Sind alle Untersysteme abgearbeitet (Abzweigung n bei Abfrage 132) wird in einer Abfrage 134 geprüft, ob noch nicht alle Betriebszustandsgruppen abgearbeitet sind. Ist dies der Fall (Abzweigung y), so wird im Schritt 135 die Laufvariable i um 1 erhöht und ausgehend vom Schritt 116 ein weiteres Paar von Adjazenzmatrizen $A_{SDG(i)V}$ bzw. $A_{SDG(i)P}$ für eine weitere Betriebszustandsgruppe i erstellt.

Im vorliegenden Anwendungsbeispiel wird für die zweite Betriebszustandsgruppe 115 (welche keine Pumpe umfasst) lediglich ein Prozessparametervektor $v_{SDG2V}$ sowie eine leere Adjazenzmatrix $A_{SDG2V}$ erstellt.

$$v_{SDG2V} = \begin{pmatrix} M15 \\ M16 \\ M17 \\ L1P \\ L2P \\ L2U \\ V17 \\ S16 \\ V2 \\ S14 \end{pmatrix}$$

GLG 11

Sind auch alle Betriebszustandsgruppen b abgearbeitet (Abzweigung n bei Abfrage 134), so werden im Schritt 136 noch die Abgrenzungen der einzelnen Betriebszustandsgruppen - im vorliegenden Fall also das Ventil "VT.KRE-U050" für die erste Betriebszustandsgruppe 114 und die Ventile "VT.KRC-U170" und "VT.KVL-U230" für die zweite Betriebszustandsgruppe 115 - berücksichtigt. Anschließend wird am Ende 137 des Programmablaufs das System von Gesamtgraphen der Industrieanlage (bestehend aus b Paaren von Betriebszustands-Graphen) erstellt.

Für obiges Anwendungsbeispiel ergeben sich hiermit für den ersten Betriebszustand 1 der in FIG 20 gezeigte Pumpen-Gesamtgraph 140 sowie der in FIG 21 gezeigte Ventil-Gesamtgraph 141. Für den zweiten Betriebszustand ergibt sich entsprechend der in FIG 22 gezeigte Ventil-Gesamtgraph 142. Die Gesamtgraphen 140, 141 und 142 bilden zusammen das verfahrensgemäß zu erstellende System von Gesamtgraphen der Anlage 2.

Gemäß oben genannter Konventionen können auch diese Graphen in Form von Adjazenzmatrizen dargestellt werden.

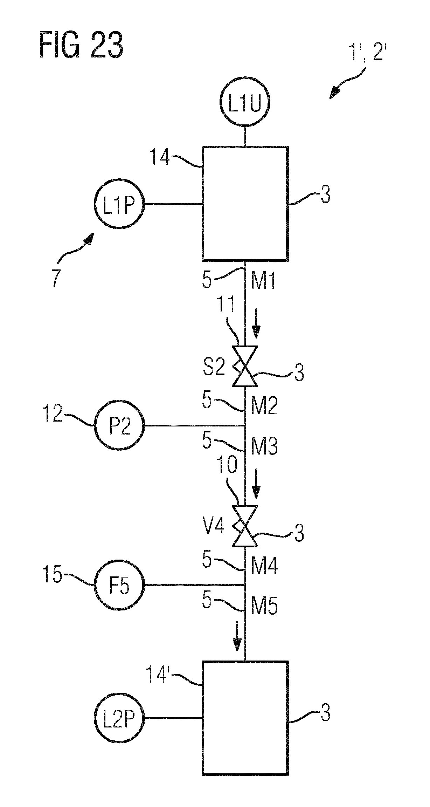

Um den oder einen derart ermittelten Graphen mittels des ESFA-Verfahrens auswertbar zu machen, werden im Anschluss an die Erstellung Fehlerknoten eingeführt. Dies wird im Folgenden aus Gründen der besseren Übersichtlichkeit anhand eines weiter vereinfachten zweiten Anwendungsbeispiels erläutert. FIG 23 zeigt diesbezüglich ein RI-Fließbild 1' einer beispielhaften weiteren (Industrie-)Anlage 2', welche als Komponenten 3 einen ersten Behälter 14, dem zwei Prozessparameter L1U bzw. L1P zugeordnet sind, ein Stellventil 11, welchem ein Prozessparameter S2 zugeordnet ist, einen Drucksensor 12, welchem ein Prozessparameter P2 zugeordnet ist, ein Handventil 10, welchem ein Prozessparameter V4 zugeordnet ist, einen Durchflussmesser 15, welchem als Prozessparameter ein Massenstrom M5 zugeordnet ist, sowie einen zweiten Behälter 14', welchem ein Prozessparameter L2P zugeordnet ist, umfasst. Die einzelnen Komponenten 3 sind durch fünf Rohrleitungsabschnitte 5 miteinander verbunden.

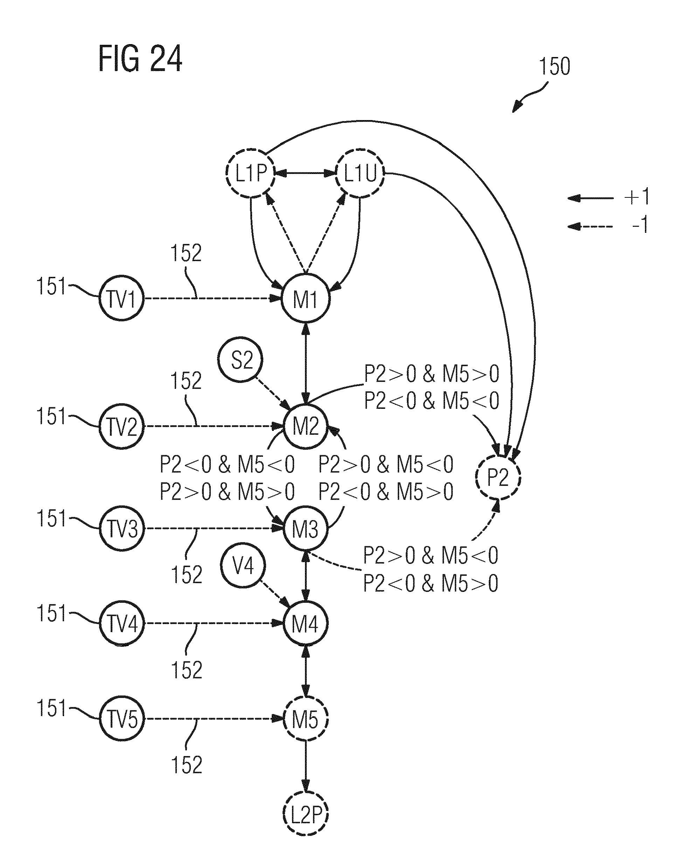

Der nach dem vorstehend beschriebenen Erstellungs-Verfahren ermittelte Ventil-Graph 150 der Anlage 2' ist in FIG 24 gezeigt. Der zugehörige Prozessparametervektor $V_{SDG1V}$ sowie die zugehörige Adjazenzmatrix $A_{SDG1V}$ sind den GLG 12 bzw. 13 zu entnehmen:

$$v_{SDG(1)V} = \begin{pmatrix} M1 \\ M2 \\ M3 \\ M4 \\ M5 \\ L1P \\ L1U \\ L2P \\ P2 \\ V4 \\ S2 \end{pmatrix}$$

GLG 12

$$A_{SDG(1)V} = \begin{pmatrix} 0 & 1 & 0 & 0 & 0 & -1 & -1 & 0 & 0 & 0 & 0 \\ 1 & 0 & 1 & 0 & 0 & 0 & 0 & 0 & 1 & 0 & 0 \\ 0 & 1 & 0 & 1 & 0 & 0 & 0 & 0 & -1 & 0 & 0 \\ 0 & 0 & 1 & 0 & 1 & 0 & 0 & 0 & 0 & 0 & 0 \\ 0 & 0 & 0 & 1 & 0 & 0 & 0 & 1 & 0 & 0 & 0 \\ 1 & 0 & 0 & 0 & 0 & 0 & 1 & 0 & 1 & 0 & 0 \\ 1 & 0 & 0 & 0 & 0 & 1 & 0 & 0 & 1 & 0 & 0 \\ 0 & 0 & 0 & 0 & 0 & 0 & 0 & 0 & 0 & 0 & 0 \\ 0 & 0 & 0 & 0 & 0 & 0 & 0 & 0 & 0 & 0 & 0 \\ 0 & 0 & 0 & -1 & 0 & 0 & 0 & 0 & 0 & 0 & 0 \\ 0 & -1 & 0 & 0 & 0 & 0 & 0 & 0 & 0 & 0 & 0 \end{pmatrix}$$

GLG 13

Beispielhaft ist als Fehlerursache eine als "Teilverstopfung" TV bezeichnete, einen Massenstrom reduzierende Blockade in einem Rohrleitungsabschnitt 5 gewählt. Dabei kann für jeden der Rohrleitungsabschnitte 5 bzw. deren zugeordnete Massenströme Mx (x = 1,2,...,5) jeweils ein Fehlerursacheknoten 151 erstellt werden, wobei jeweils von dem eine Teilverstopfung TVx repräsentierenden Knoten 151 eine negativ gewichtete Kante 152 zu dem entsprechenden, den jeweiligen Massenstrom Mx repräsentierenden Knoten verläuft.

Ein zugeordneter Fehlerursachenvektor vF lautet dann:

$$v_F = \begin{pmatrix} TV1 \\ TV2 \\ TV3 \\ TV4 \\ TV5 \end{pmatrix}$$

GLG 14

Bezogen auf einen zu obigem Graphen gehörigen Prozessparametervektor

$$v^T_{SDG(1)V} = (M1 \quad M2 \quad M3 \quad M4 \quad M5 \quad L1P \quad L1U \quad L2P \quad P2 \quad V4 \quad S2)$$

GLG 15

(in GLG 15 der Übersichtlichkeit halber als transponierter Vektor $v^T_{SDG(i)V}$ gezeigt) hat die zugehörige Fehlerursachenadjazenzmatrix die unter sinngemäßer Verwendung der vorstehend eingeführten Schreibweise die Form

$$A_F = \begin{pmatrix} -1 & 0 & 0 & 0 & 0 & 0 & 0 & 0 & 0 & 0 & 0 \\ 0 & 1 & 0 & 0 & 0 & 0 & 0 & 0 & 0 & 0 & 0 \\ 0 & 0 & 1 & 0 & 0 & 0 & 0 & 0 & 0 & 0 & 0 \\ 0 & 0 & 0 & 1 & 0 & 0 & 0 & 0 & 0 & 0 & 0 \\ 0 & 0 & 0 & 0 & -1 & 0 & 0 & 0 & 0 & 0 & 0 \end{pmatrix}$$

GLG 16

Weitere Fehlertypen sind gemäß nachfolgender TAB 2 vorgesehen.

TAB 2: Fehlerursachen im Überblick

| Komponente | Fehlertyp |
|---|---|
| Rohrleitungsabschnitt 5 | Teilverstopfung |
| | Verstopfung |
| | Leckage |
| | Bruch |
| (Stell-) Ventil 10, 11 | Teilverstopfung |
| | Verstopfung |
| | Leckage |
| | zu weit geöffnet |
| | zu weit geschlossen |
| (Kreisel-) Pumpe 13 | Pumpleistung zu schwach |
| | Pumpleistung zu stark |
| | Leckage |
| | aus |
| Behälter 14 | Leckage |
| | Bruch |
| Sensor 13, 15 | zeigt zu hohen Wert an |
| | zeigt zu niedrigen Wert an |

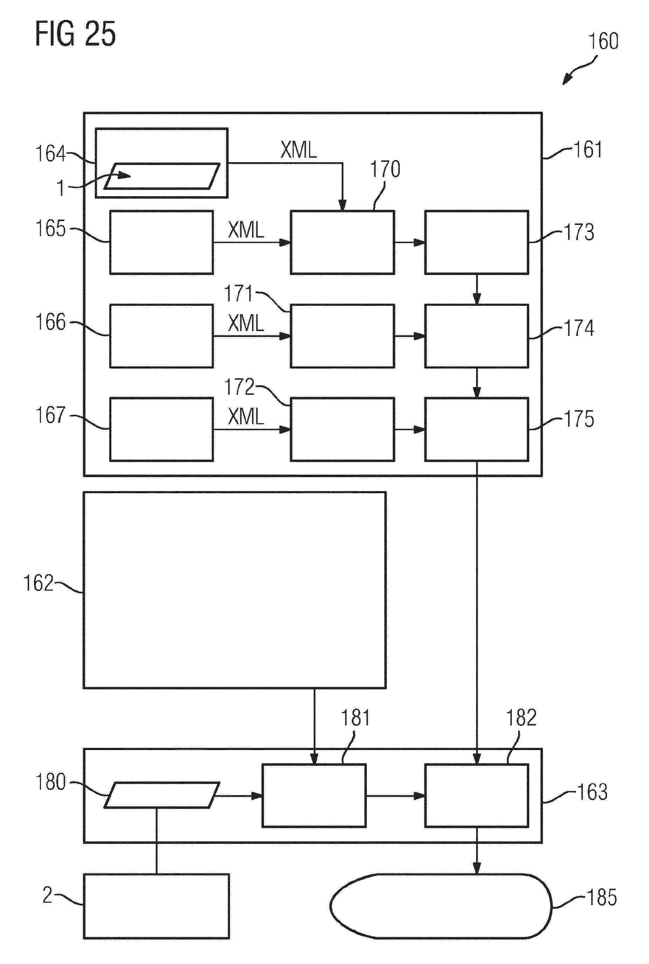

FIG 25 zeigt eine Vorrichtung 160 zur Durchführung eines Diagnose-Verfahrens zur Unterstützung der Fehlerdiagnose obiger Anlage 2.

Die Vorrichtung 160 umfasst eine Graphenerstellungseinheit 161, eine Abweichungserkennungseinheit 162 sowie eine Diagnoseeinheit 163.

Die Graphenerstellungseinheit 161 umfasst eine Datenbank 164, in welcher Anlagendaten zur Industrieanlage 2 in elektronisch verwertbarer Form, hier in Form von XML-Dateien, hinterlegt sind.

Die Anlagendaten umfassen das RI-Fließbild 1 (FIG 1) der Industrieanlage 2, Komponententyp-Daten 165, Fehler-Daten 166 sowie Regel-Daten 167.

Das RI-Fließbild 1 beinhaltet - wie vorstehend bereits im Einzelnen erläutert - Informationen darüber, welche Anlagenkomponenten 3 die Anlage 2 umfasst, welchen Komponententypen diese zuzuordnen sind und wie und in welcher Fließrichtung 6 die einzelnen Anlagenkomponenten 3 miteinander verschaltet sind.

Zu dem Fließbild 1 ist zudem hinterlegt, in welchen unterschiedlichen Betriebsweisen oder Betriebszuständen die zugehörige Industrieanlage 2 betrieben werden kann.

Als Komponententyp-Daten 165 ist zu jedem der oben genannten Komponententypen jeweils ein (unspezifischer) gerichteter, gewichteter Komponentengraph gemäß einer der FIG 3, 5, 7-9, 11, 13, 15, 17 oder 18 hinterlegt. Diese als Bausteine vorliegenden Komponentengraphen wurden zuvor aus Experimenten oder mathematischen Modellen ermittelt. Die Komponentengraphen sind - wie vorstehend beschrieben - in Form von Adjazenzmatrizen und zugehörigen Prozessparametervektoren hinterlegt.

Die Fehler-Daten 166 beinhalten Informationen darüber, wie unterschiedliche Fehlertypen auf einzelne Anlagenkomponenten 3 bzw. deren zugeordnete Prozessparameter 7 einwirken. Zu jedem Fehlertyp ist auch hier ein gerichteter, gewichteter Fehlergraph bzw. eine zugeordnete Adjazenzmatrix hinterlegt. Auch die Fehlergraphen wurden zuvor durch Experimente oder mathematische Modelle ermittelt.

Die Regel-Daten 167 beinhalten Informationen darüber, welche Regelkreise in der betrachteten Industrieanlage 2 integriert sind und wie diese wirken. Diese Informationen liegen in tabellarischer Form vor.

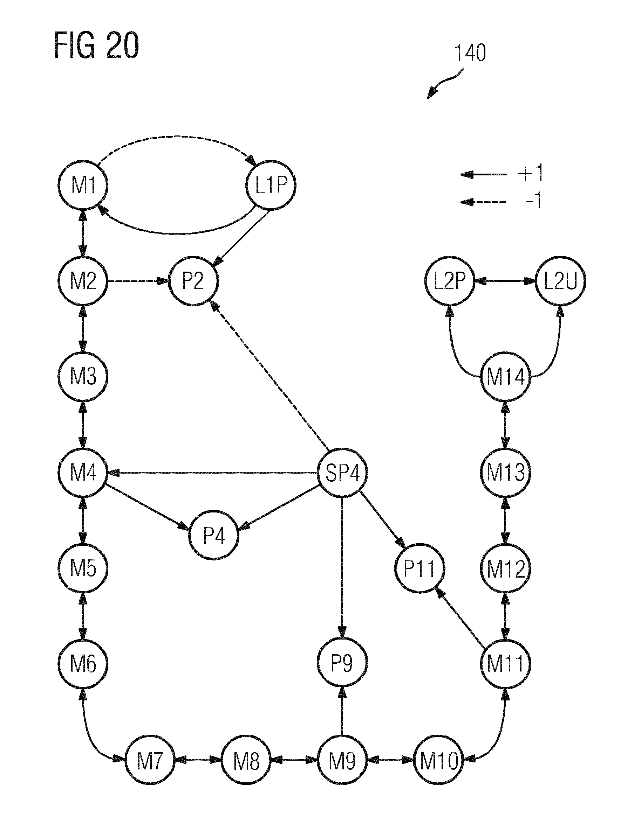

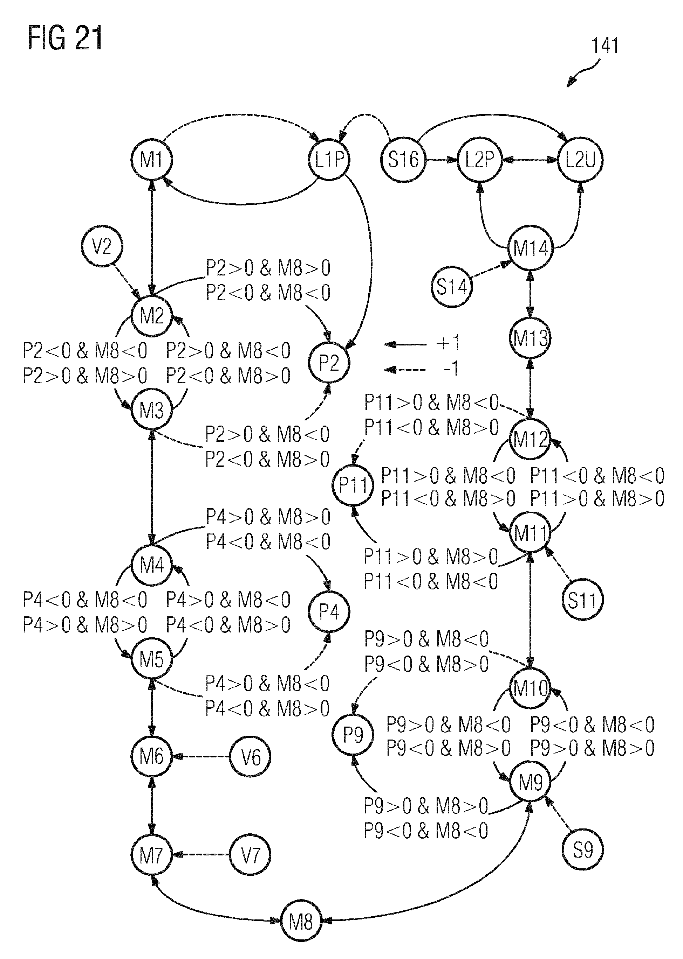

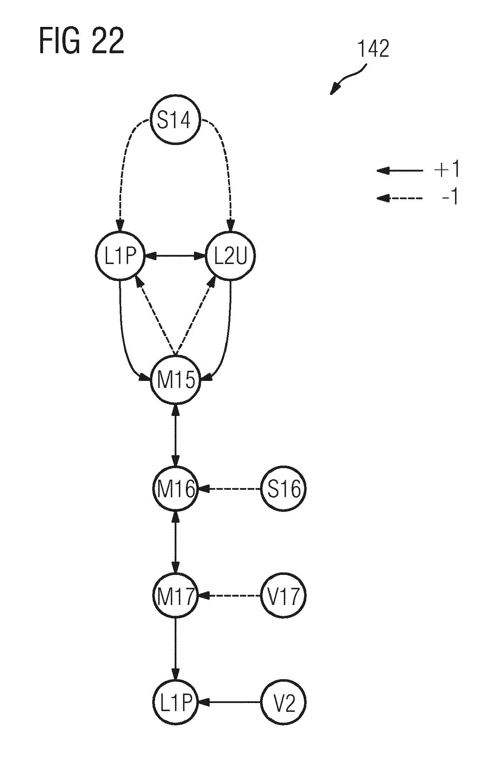

Die Graphenerstellungseinheit 161 umfasst zudem ein Erstellungsmodul 170, welches anhand des RI-Fließbildes 1 und anhand der Komponententyp-Daten 165 automatisch ein System von gerichteten, gewichteten Gesamtgraphen der Anlage 2 erstellt. Dabei umfasst das System ggf. jeweils einen Ventil-Gesamtgraphen sowie einen Pumpen-Gesamtgraphen zu jedem Betriebszustand (FIG 20 bis FIG 22). Hierzu führt das Erstellungsmodul 170 automatisch das oben beschriebene Erstellungs-Verfahren durch. Bei dem Erstellungsmodul 170 handelt es sich dabei insbesondere um ein Softwaremodul, in dem das vorstehend beschriebene Erstellungs-Verfahren programmtechnisch implementiert und das auf einem Rechner lauffähig installiert ist.

Weiterhin umfasst die Graphenerstellungseinheit 161 ein Fehlermodul 171, welches - wie zuvor beschrieben - die hinterlegten Fehler-Daten in Form von Fehlerursacheknoten in den oder die Gesamtgraphen der Industrieanlage 2 einfügt. Zudem umfasst die Graphen-Erstellungseinheit 161 ein Regelkreismodul 172, welches - wie zuvor beschrieben - durch Rückrechnen die Informationen des Regelkreises in den oder die Gesamtgraphen der Anlage 2 einfügt.

Somit wird durch die Graphenerstellungseinheit 161 mindestens ein Gesamtgraph 173 erstellt, welcher mit den Fehlertypen zu einem Fehlergraphen 174 sowie zusätzlich mit den Regelkreisinformationen zu einem auswertbaren Diagnose-Graphen 175 zusammengeführt wird.

In der Abweichungserkennungseinheit 162 sind für alle Prozessparameter 7 der Industrieanlage 2 Kriterien hinterlegt, bei deren Erfüllung eine Abweichung des jeweiligen Prozessparameters von einem Sollzustand als fehlerhaft erkannt wird. Durch diese Kriterien wird beispielsweise ein den Sollzustand umgebender Gültigkeitsbereich definiert. In der hier dargestellten Ausführungsform ist für jeden Prozessparameter 7 eine fest vorgegebene Alarmschwelle gesetzt, wobei eine Unter- oder Überschreitung der jeweiligen Alarmschwelle als Abweichung aus dem Gültigkeitsbereich bewertet wird. In einer alternativen Ausführungsform ist vorgesehen, dass historische Prozessdaten herangezogen werden, anhand derer selbstorganisierende Karten (engl.: self organising maps "SOM") eingelernt werden, wodurch kritische Abweichungen selbstlernend und dadurch flexibel erkannt werden können.

Die Diagnoseeinheit 163 umfasst ein Prozessdatenmodul 180, ein Vergleichsmodul 181 sowie ein Auswertemodul 182. Das Prozessdatenmodul 180 ist zumindest signaltechnisch mit der Industrieanlage 2 bzw. deren beobachtbaren Anlagenkomponenten 3 verschaltet und erfasst laufend messtechnisch erfassbare Prozessparameter 7 der zugehörigen Anlagenkomponenten 3 der Industrieanlage 2. Das Prozessdatenmodul 2 führt die erfassten Prozessparameter 7 dem Vergleichsmodul 181 zu. Das Vergleichsmodul 181 greift auf die jeweils vorgegebenen Grenzwerte der Abweichungserkennungseinheit 162 zu und ermittelt jeweils für alle erfassten Prozessdaten 7, ob diese von ihrem jeweiligen Gültigkeitsbereich abweichen. Im Falle einer erkannten Abweichung gibt das Vergleichsmodul 181 einen Diagnosebefehl an das Auswertemodul 182 aus. Das Auswertemodul 182 greift daraufhin auf den erstellten Diagnose-Graphen 175 der Graphenerstellungseinheit 161 zu und wertet diesen mit Hilfe des ESFA-Verfahrens aus. Dabei werden im Wesentlichen alle durch das Vergleichsmodul 181 ermittelten Abweichungen als so genannte Symptome betrachtet. Ausgehend von den Symptomen werden durch rückwärtiges Ablaufen der Kanten des Diagnose-Graphen 175 diejenigen Fehlerursachen gesucht, welche die gleichen Symptome aufweisen, so dass diese Fehlerursachen als mögliche Fehlerursachen ermittelt werden.

Schließlich zeigt das Auswertemodul 182 die ermittelten möglichen Fehlerursachen auf einem Anzeigegerät 185 an. Dabei ist das Anzeigegerät 185 beispielsweise ein eigenständiger Monitor. Alternativ dazu ist jedoch auch denkbar, dass als Anzeigegerät 185 ein Anzeigebereich im Rahmen eines Bedienbildes einer Leitwarte der Industrieanlage 2 vorgesehen ist.

Die Anzeige kann dabei einerseits durch eine Textdarstellung erfolgen, wie beispielsweise:

"Abweichungen vom Normalzustand entdeckt. Mögliche Fehlerursachen:

- Teilverstopfung Rohr M10/M11
- Teilverstopfung Stellventil VT.KVL-U210
- Stellventil VT.KVL-U210 zu weit geschlossen".

Es ist jedoch auch möglich, dass die für die möglichen Fehlerursachen infrage kommenden Anlagenkomponenten grafisch, insbesondere im Rahmen eines Bedienbildes einer Leitwarte der Industrieanlage, angezeigt werden.

Das vorstehend beschriebene Verfahren wurde lediglich zum Zweck der Verdeutlichung in konkreter Anwendung auf zwei beispielhafte Anlagen 2 und 2' beschrieben. Es ist darüber hinaus selbstverständlich aber auch auf beliebige andere Anlagen anwendbar. Falls eine solche Anlage Komponenten enthält, die nicht einem der vorstehend eingeführten Komponententypen entsprechen, sind die fehlenden Komponententypen sinngemäß zu ergänzen.

Die Erfindung ist ferner nicht auf das vorstehend beschriebene Ausführungsbeispiel des Verfahrens und der zugehörigen Vorrichtung beschränkt. Vielmehr können weitere Ausführungsvarianten der Erfindung anhand der vorstehenden Beschreibung von dem Fachmann abgeleitet werden.

**Patentansprüche**

1. Verfahren zur Unterstützung der Fehlerdiagnose einer Industrieanlage (2), die eine Mehrzahl von über ein Rohrleitungssystem (4) verbundenen Anlagenkomponenten (3) aufweist, wobei jede Anlagenkomponente (3) einem von mehreren abstrakten Komponententypen (5, 10-15) zuordenbar ist, wobei ein RI-Fließbild (1) der Industrieanlage (2) ausgehend von einem Startpunkt entlang eines Rohrleitungssystems (4) komponentenweise abgearbeitet wird, **dadurch gekennzeichnet,**

- **dass** jedem Komponententyp (5, 10-15) ein gewichteter, gerichteter Komponentengraph (30, 40, 50, 60, 61, 70, 80, 90, 95, 96) zugeordnet ist,
- **dass** bei jeder Anlagenkomponente (3) auf deren dem Komponententyp (5, 10-15) nach zugeordneten Komponentengraph (30, 40, 50, 60, 61, 70, 80, 90, 95, 96) zugegriffen wird,
- **dass** die einzelnen Komponentengraphen (30, 40, 50, 60, 61, 70, 80, 90, 95, 96) zu einem System von gewichteten, gerichteten Gesamtgraphen (140, 141, 142) der Industrieanlage (2) zusammengefügt werden, deren Knoten jeweils mehreren einzelnen Anlagenkomponenten (3) zugeordnet sind, und
- **dass** Auswirkungen von Fehlerursachen hinterlegt sind, wobei jede Fehlerursache als zusätzlicher Fehlerursacheknoten (151) und deren Auswirkungen in Form mindestens einer gewichteten Kante (152) dem oder jedem Gesamtgraphen (150) zur Bildung eines gerichteten, gewichteten Diagnose-Graphen (175) hinzugefügt werden.

2. Verfahren nach Anspruch 1,

- bei dem jeder Komponentengraph (30, 40, 50, 60, 61, 70, 80, 90, 95, 96) in Form einer zugeordneten Komponentenadjazenzmatrix vorgegeben wird,
- bei dem allen Anlagenkomponenten (3) eindeutig bezeichnete, insbesondere nummerierte, und damit spezifizierte Prozessparameter zugeordnet werden,
- bei dem entsprechend der Anzahl der betrachteten Prozessparameter der Anlagenkomponenten (3) eine leere Gesamtadjazenzmatrix des oder jedes Gesamtgraphen (140, 141, 142) der Industrieanlage (2) erstellt wird,
- bei dem ausgehend von einem Startpunkt komponentenweise jeweils für eine Anlagenkomponente (3) mit Hilfe der eindeutigen Bezeichnung der den Anlagenkomponenten (3) zugeordneten Prozessparameter die zugehörige Komponentenadjazenzmatrix in Relation zu den konkreten Prozessparametern der jeweiligen Komponente (3) spezifiziert wird und
- bei dem jedes der Elemente der Komponentenadjazenzmatrix nach Maßgabe der Spezifikation an eine entsprechende korrespondierende Position in die jeweilige Gesamtadjazenzmatrix übertragen wird,
- wobei entlang des Rohrleitungssystems (4) so lange sukzessive auf Anlagenkomponenten (3) der Industrieanlage (2) zugegriffen wird, bis für alle Anlagenkomponenten (3) eine Eintragung in der jeweiligen Gesamtadjazenzmatrix erfolgt ist.

3. Verfahren nach Anspruch 1 oder 2,
wobei als Startpunkt ein Behälter (14) oder eine Rohrleitungsverzweigung des RI-Fließbilds (1) gewählt wird.

4. Verfahren nach einem der Ansprüche 1 bis 3,
wobei dem Rohrleitungssystem (4) in Fließrichtung gefolgt wird.

5. Verfahren nach einem der Ansprüche 1 bis 4,
bei dem der Diagnose-Graph (175) bei einer Abweichung eines beobachtbaren Prozessparameters einer der Anlagenkomponenten (3) von einem Normalzustand unter Anwendung des ESFA-Verfahrens zur Ermittlung von möglichen Fehlerursachen ausgewertet wird.

6. Verfahren nach Anspruch 5,
bei dem die Abweichung durch Vergleich mit historischen Daten der Industrieanlage (2) erkannt wird.

7. Verfahren nach Anspruch 5 oder 6,
bei dem die Abweichung mit Hilfe von fest vorgegebenen Alarmschwellen erkannt wird.

8. Verfahren nach einem der Ansprüche 1 bis 7,
bei dem das RI-Fließbild (1) in einzelne Untersysteme unterteilt wird, bei dem zunächst für jedes Untersystem ein Untersystem-Graph als Gesamtgraph oder Teil desselben erstellt wird.

9. Verfahren nach Anspruch 8,
bei dem die einzelnen Untersysteme derart gewählt werden, dass sich die Anlagenkomponenten (3) der jeweiligen Untersysteme gegenseitig nicht beeinflussen, und bei dem insbesondere jeweils ein Behälter (14) als Grenzkomponente zwischen zwei Untersystemen herangezogen wird.

**10.** Verfahren nach einem der Ansprüche 1 bis 9,
bei dem das RI-Fließbild (1) in einzelne Betriebszustandsgruppen (114, 115) unterteilt wird, wobei jede Betriebszustandsgruppe (114, 115) jeweils diejenigen Anlagenkomponenten (3) umfasst, welche in einem zugeordneten Betriebszustand involviert sind, und
bei dem für jede Betriebszustandsgruppe (114, 115) ein eigener Betriebszustandsgraph (140, 141; 142) als Gesamtgraph erstellt wird, welcher jeweils nur die Prozessparameter der in dem jeweiligen Betriebszustand involvierten Anlagenkomponenten (3) als Knoten umfasst.

**11.** Verfahren nach einem der Ansprüche 1 bis 10,
bei dem das RI-Fließbild (1) zur Entkopplung von Pumpen (13) und Ventilen (10, 11) zweimal durchlaufen wird, wobei beim ersten Durchlauf alle Anlagenkomponenten (3) mit Ausnahme von Pumpen (13) zur Erstellung eines Ventil-Gesamtgraphen abgearbeitet werden und wobei beim zweiten Durchlauf alle Anlagenkomponenten (3) mit Ausnahme von Ventilen (10, 11) zur Erstellung eines Pumpen-Gesamtgraphen abgearbeitet werden.

**12.** Verfahren nach einem der Ansprüche 1 bis 11,
bei dem aufgrund eines tatsächlichen Wertes eines durch eine Stellgröße geregelten Prozessparameters und des tatsächlichen Werts der Stellgröße auf einen hypothetischen Wert des Prozessparameters zurückgerechnet wird, den dieser Prozessparameter vor dem Eingreifen der Regelung haben würde.

**13.** Vorrichtung (160) zur Unterstützung der Fehlerdiagnose einer Industrieanlage (2) gemäß dem Verfahren nach einem der Ansprüche 1 bis 12,

   - mit einer Datenbank (164), in welcher das RI-Fließbild (1) sowie die den Anlagenkomponenten (3) zugehörigen Komponentengraphen (30, 40, 50, 60, 61, 70, 80, 90, 95, 96) hinterlegt sind,
   - mit einem Erstellungsmodul (170), welches dazu eingerichtet ist, das Verfahren nach einem der Ansprüche 1 bis 12 durchzuführen.

**14.** Vorrichtung (160) nach Anspruch 13,

   - mit einer Diagnose-Einheit (163), welche dazu eingerichtet ist, ein Diagnoseverfahren zur Fehlerursachenfin-dung durchzuführen.

FIG 1

FIG 2

Mx ——▶ Mn

5      5

FIG 3                                    30

Mx ◀—— Mn ◀—— +1

31    33    32

FIG 4

Mv —▶▷◁— Mx —▶

5      10    5

FIG 5                                    40

41 — Vx

44 —              ◀—— +1
                  ◀---- −1

Mv ◀——▶ Mx

43    45    42

FIG 6

Mv —▷◁— Mx —▶

5      11    5

FIG 7                                    50

Sx

                  ◀—— +1
                  ◀---- −1

Mv ◀——▶ Mx

FIG 8              60

Sx

62 —              ◀---- −1

Ly

FIG 9              61

Sx

63 —              ◀—— +1

Ly

EP 2 587 328 A1

**FIG 10**

**FIG 11**

**FIG 12**

**FIG 13**

**FIG 14**

**FIG 15**

22

**FIG 16**

**FIG 17**

**FIG 18**

Px>0 & My>0
Px<0 & My<0

Px<0 & My<0
Px>0 & My>0

Px>0 & My<0
Px<0 & My>0

Px>0 & My<0
Px<0 & My>0

+1
−1

FIG 19

# FIG 20

140

FIG 21

141

# FIG 22

142

+1
−1

FIG 23

1', 2'

L1U

14

L1P

7

3

5 M1

11

S2

3

5 M2

12 P2

5 M3

10

V4

3

5 M4

15 F5

5 M5

14'

L2P

3

FIG 24

# FIG 25

160

164

1

XML

170

165

XML

173

171

166

XML

174

172

167

XML

175

162

181

182

180

2

163

185

**EP 2 587 328 A1**

Europäisches
Patentamt

European
Patent Office

Office européen
des brevets

# EUROPÄISCHER RECHERCHENBERICHT

Nummer der Anmeldung

EP 12 17 9481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 01/63371 A2 (SIEMENS AG [DE]; MERKLEIN THOMAS [DE]) 30. August 2001 (2001-08-30) * Seite 2, Zeile 21 - Seite 8, Zeile 15; Abbildung 1 * ----- | 1-14 | INV. G05B23/02 |
| A | WO 2010/142977 A1 (BAE SYSTEMS PLC [GB]; SNOOKE NEAL [GB]) 16. Dezember 2010 (2010-12-16) * Seite 9, Zeile 13 - Seite 24, Zeile 8; Abbildungen 1-12 * ----- | 1-14 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 19. März 2013 | Nettesheim, Johannes |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 12 17 9481

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2013

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO 0163371 | A2 | | 30-08-2001 | AT | 277375 | T | 15-10-2004 |
| | | | | AU | 766178 | B2 | 09-10-2003 |
| | | | | AU | 3724401 | A | 03-09-2001 |
| | | | | CN | 1406350 | A | 26-03-2003 |
| | | | | DE | 50103755 | D1 | 28-10-2004 |
| | | | | DK | 1261897 | T3 | 24-01-2005 |
| | | | | EP | 1261897 | A2 | 04-12-2002 |
| | | | | ES | 2228814 | T3 | 16-04-2005 |
| | | | | JP | 2003528374 | A | 24-09-2003 |
| | | | | NO | 20024066 | A | 26-08-2002 |
| | | | | PT | 1261897 | E | 28-02-2005 |
| | | | | US | 2003014298 | A1 | 16-01-2003 |
| | | | | WO | 0163371 | A2 | 30-08-2001 |
| WO 2010142977 | A1 | | 16-12-2010 | AU | 2010258420 | A1 | 19-01-2012 |
| | | | | EP | 2440980 | A1 | 18-04-2012 |
| | | | | US | 2012131388 | A1 | 24-05-2012 |
| | | | | WO | 2010142977 | A1 | 16-12-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005246112 A1

- EP 2043033 A1

**In der Beschreibung aufgeführte Nicht-Patentliteratur**

- **D.S. NAM et al.** Automatic Construction of Extended Symptom-Fault Associations from the signed Digraph. *Computers & Chemical Engineering,* 1996, vol. 20, 605-610